# EUROPEAN PATENT APPLICATION

(11) **EP 4 607 985 A2**
(43) Date of publication of application: **27.08.2025**
(21) Application number: 25173921.5
(22) Date of filing: 17.03.2021
(51) Int. Cl.: H04W 12/08

(54) **SESSION MANAGEMENT FOR PROCESSING OFFLOAD**

(30) Priority: 17.03.2020 US 202062990766 P
(62) Divisional of application: 21717701.3
(71) Applicant: Ofinno, LLC, Reston, VA 20190 (US)
(72) Inventor: RYU, Jinsook, Reston, 20190 (US); Dinan, Esmael Hejazi, Reston, 20190 (US); QIAO, Weihua, Reston, 20190 (US); TALEBI FARD, Peyman, Reston, 20190 (US); Park, Kyungmin, Reston, 20190 (US); CHAE, Jyukjin, Reston, 20190 (US); Kim, Taehun, Reston, 20190 (US)
(74) Representative: Westphal, Mussgnug & Partner, Patentanwälte mbB

(57) **Abstract**

A method comprises the step of receiving, by a session management function, SMF, from a wireless device, a first message comprising a request for a processing time associated with offloaded processing of data for an application. The method further comprises the step of sending, by the SMF to the wireless device and based on the request, a second message comprising the processing time indicating an amount of time associated with the offloaded processing of the data

## Description

### TECHNICAL FIELD

This application relates to the field of wireless communication systems such as 4G communication systems (e.g., LTE), 5G communication systems, other communication systems compatible with 4G and/or 5G communication systems, and related methods, systems and apparatuses.

### BACKGROUND

With regard to the prior art, reference is made to the published patent application US 2018/249317 A1.

### SUMMARY

The invention is set out on the appended claims.

### BRIEF DESCRIPTION OF THE SEVERAL VIEWS OF THE DRAWINGS

Examples of several of the various embodiments of the present invention are described herein with reference to the drawings.
FIG. 1 is a diagram of an example 5G system architecture as per an aspect of an embodiment of the present disclosure.
FIG. 2 is a diagram of an example 5G System architecture as per an aspect of an embodiment of the present disclosure.
FIG. 3 is a system diagram of an example wireless device and a network node in a 5G system as per an aspect of an embodiment of the present disclosure.
FIG. 4 is a system diagram of an example wireless device as per an aspect of an embodiment of the present disclosure.
FIG. 5A and FIG. 5B depict two registration management state models in UE 100 and AMF 155 as per an aspect of embodiments of the present disclosure.
FIG. 6A and FIG. 6B depict two connection management state models in UE 100 and AMF 155 as per an aspect of embodiments of the present disclosure.
FIG. 7 is diagram for classification and marking traffic as per an aspect of an embodiment of the present disclosure.
FIG. 8 is an example call flow as per an aspect of an embodiment of the present disclosure.
FIG. 9 is an example call flow as per an aspect of an embodiment of the present disclosure.
FIG. 10 is an example call flow as per an aspect of an embodiment of the present disclosure.
FIG. 11 is an example call flow as per an aspect of an embodiment of the present disclosure.
FIG. 12 is an example call flow as per an aspect of an embodiment of the present disclosure.
FIG. 13 is an example call flow as per an aspect of an embodiment of the present disclosure.

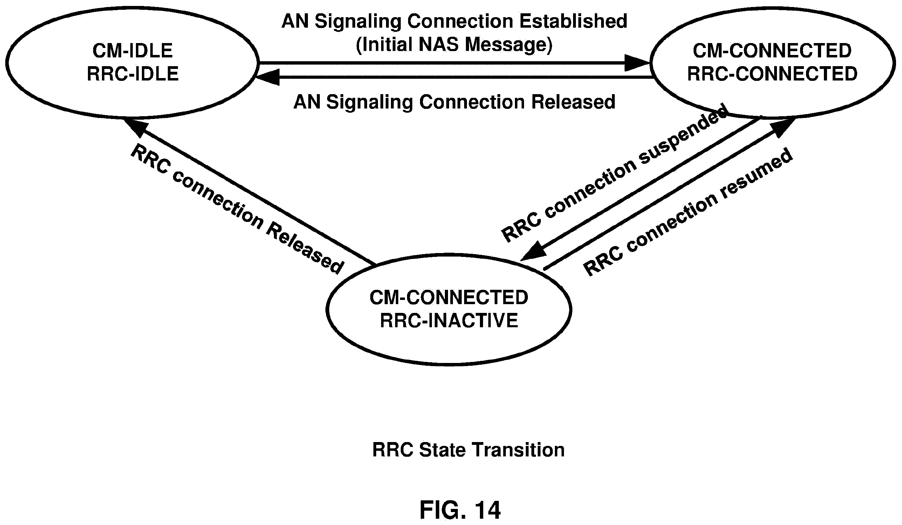

FIG. 14 is an example radio resource control (RRC) state transition aspect as per an aspect of an embodiment of the present disclosure.
FIG. 15 illustrates a service-based architecture for a 5G network regarding interaction between a control plane (CP) and a user plane (UP).
FIG. 16 illustrates an embodiment of a system that includes an application server controller.
FIG. 17 illustrates segmented management between a cellular network domain and a mobile edge computing (MEC) domain.
FIG. 18A is an example call flow for MEC discovery.
FIG. 18B illustrates an example of how an AS controller can exert influence on traffic routing of application data within a core network.
FIG. 19 illustrates an example of an AS controller influencing traffic routing of application data by causing a user plane reconfiguration within a core network.
FIG. 20 illustrates examples of computational offloading options.
FIG. 21 illustrates an example call flow for offload determination in accordance with an example embodiment of the present disclosure.
FIG. 22 illustrates an example call flow for offload determination in accordance with an example embodiment of the present disclosure.
FIG. 23 illustrates an example flow chart of a present disclosure.
FIG. 24 illustrates an example flow chart of a present disclosure.
FIG. 25 illustrates an example flow chart of a present disclosure.

### DETAILED DESCRIPTION OF EXAMPLES

Example embodiments of the present invention enable implementation of enhanced features and functionalities in 4G/5G systems. Embodiments of the technology disclosed herein may be employed in the technical field of 4G/5G systems and network slicing for communication systems. More particularly, the embodiments of the technology disclosed herein may relate to 5G core network and 5G systems for network slicing in communication systems. Throughout the present disclosure, UE, wireless device, and mobile device are used interchangeably.

The following acronyms are used throughout the present disclosure:
- 5G: 5th generation mobile networks
- 5GC: 5G Core Network
- 5GS: 5G System
- 5G-AN: 5G Access Network
- 5QI: 5G QoS Indicator
- ACK: Acknowledgement
- AF: Application Function
- AMF: Access and Mobility Management Function
- AN: Access Network
- CDR: Charging Data Record
- CCNF: Common Control Network Functions
- CIoT: Cellular IoT
- CN: Core Network
- CP: Control Plane
- DDN: Downlink Data Notification
- DL: Downlink
- DN: Data Network
- DNN: Data Network Name
- DRX: Discontinuous Reception
- F-TEID: Fully Qualified TEID
- gNB: next generation Node B
- GPSI: Generic Public Subscription Identifier
- GTP: GPRS Tunneling Protocol
- GUTI: Globally Unique Temporary Identifier
- HPLMN: Home Public Land Mobile Network
- IMSI: International Mobile Subscriber Identity
- LADN: Local Area Data Network
- LI: Lawful Intercept
- MEI: Mobile Equipment Identifier
- MICO: Mobile Initiated Connection Only
- MME: Mobility Management Entity
- MO: Mobile Originated
- MSISDN: Mobile Subscriber ISDN
- MT: Mobile Terminating
- N3IWF: Non-3GPP InterWorking Function
- NAI: Network Access Identifier
- NAS: Non- Access Stratum
- NAS-MM: Non-Access Stratum mobility management
- NAS-SM: Non-Access Stratum session management
- NB-IoT: Narrow Band IoT
- NEF: Network Exposure Function
- NF: Network Function
- NGAP: Next Generation Application Protocol
- NR: New Radio
- NRF: Network Repository Function
- NSI: Network Slice Instance
- NSSAI: Network Slice Selection Assistance Information
- NSSF: Network Slice Selection Function
- OCS: Online Charging System
- OFCS: Offline Charging System
- PCF: Policy Control Function
- PDU: Packet/Protocol Data Unit
- PEI: Permanent Equipment Identifier
- PLMN: Public Land Mobile Network
- PRACH: Physical Random Access CHannel
- PLMN: Public Land Mobile Network
- PSA: PDU Session Anchor
- RAN: Radio Access Network
- QFI: QoS Flow Identity
- RM: Registration Management
- S1-AP: S1 Application Protocol
- SBA: Service Based Architecture
- SEA: Security Anchor Function
- SCM: Security Context Management
- SI: System Information
- SIB: System Information Block
- SMF: Session Management Function
- SMSF: SMS Function
- S-NSSAI: Single Network Slice Selection Assistance information
- SSC: Session and Service Continuity
- SUCI: Served User Correlation ID
- SUPI: Subscriber Permanent Identifier
- TEID: Tunnel Endpoint Identifier
- UDM: Unified Data Management
- UER: Unified Data Repository
- UDR: User Data Repository
- UE: User Equipment
- UL: Uplink
- UL CL: Uplink Classifier
- UPF: User Plane Function
- VPLMN: Visited Public Land Mobile Network

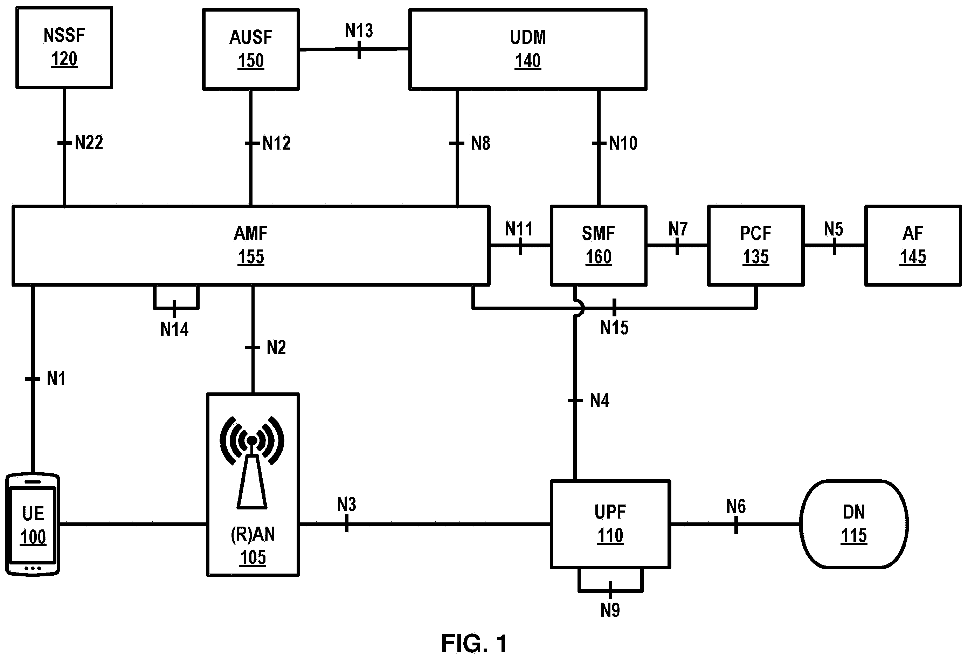

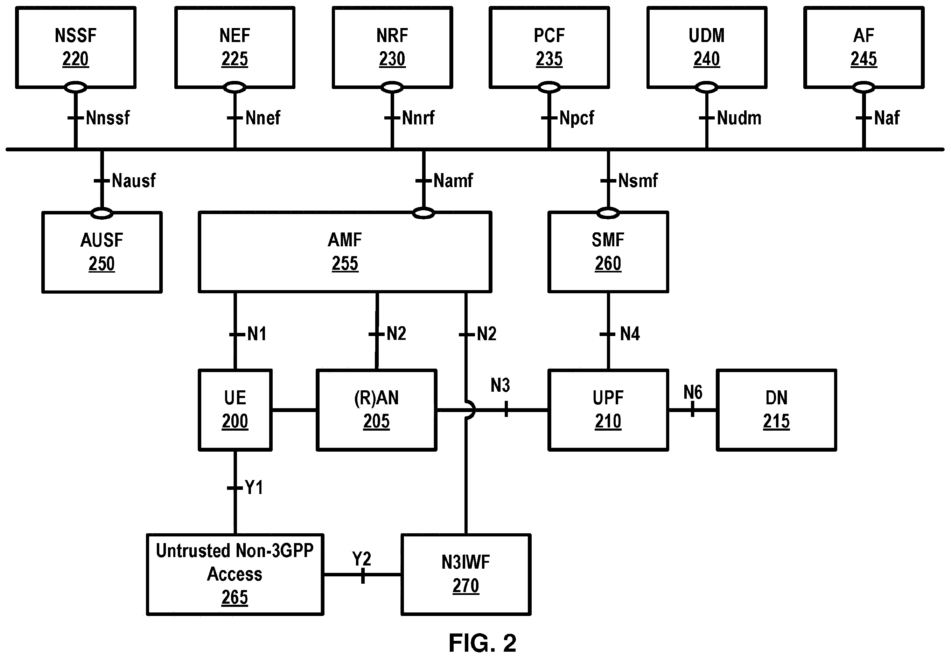

Example FIG. 1 and FIG. 2 depict a 5G system comprising of access networks and 5G core network. An example 5G access network may comprise an access network connecting to a 5G core network. An access network may comprise an NG-RAN 105 and/or non-3GPP AN 165. An example 5G core network may connect to one or more 5G access networks 5G-AN and/or NG-RANs. 5G core network may comprise functional elements or network functions as in example FIG. 1 and example FIG. 2 where interfaces may be employed for communication among the functional elements and/or network elements.

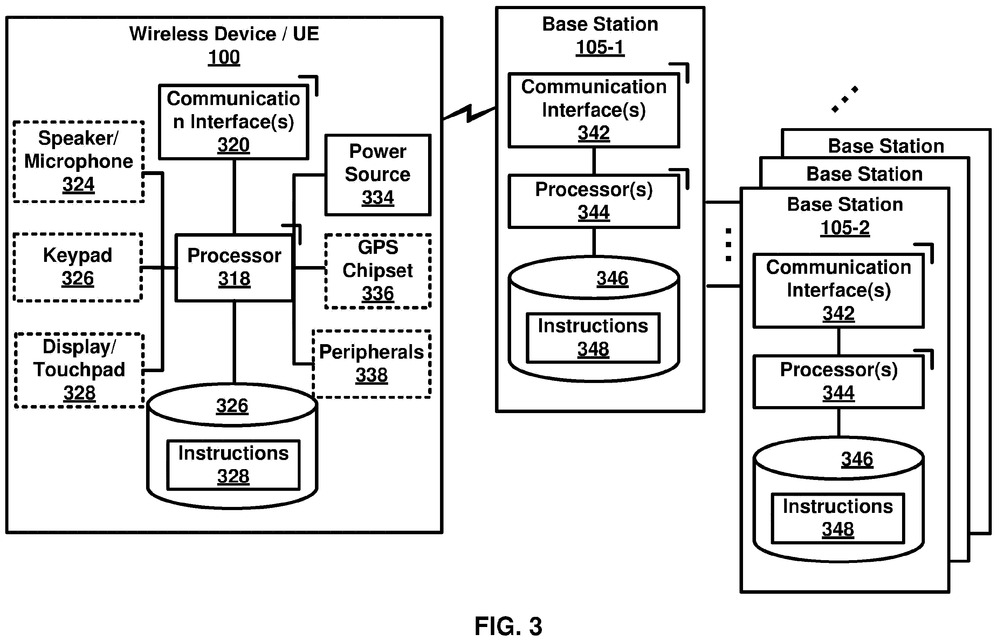

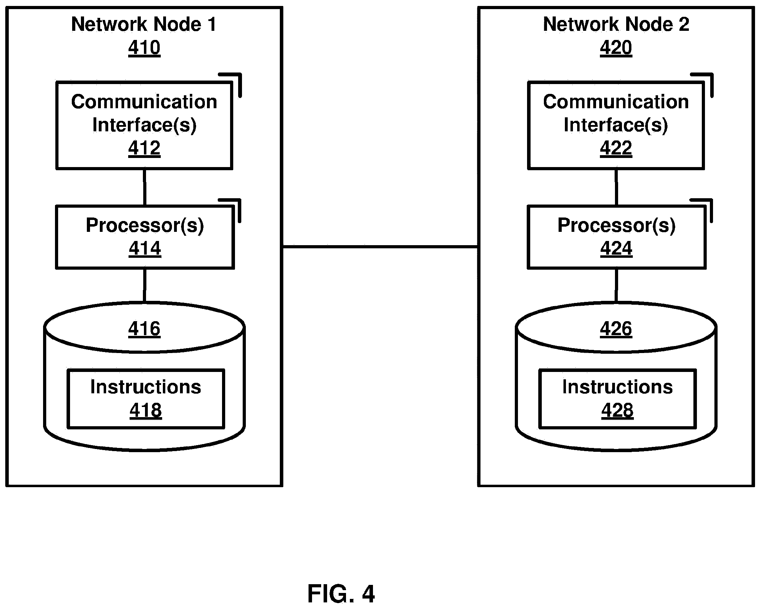

In an example, a network function may be a processing function in a network, which may have a functional behavior and/or interfaces. A network function may be implemented either as a network element on a dedicated hardware, and/or a network node as depicted in FIG. 3 and FIG. 4, or as a software instance running on a dedicated hardware and/or shared hardware, or as a virtualized function instantiated on an appropriate platform.

In an example, access and mobility management function, AMF 155, may include the following functionalities (some of the AMF 155 functionalities may be supported in a single instance of an AMF 155): termination of RAN 105 CP interface (N2), termination of NAS (N1), NAS ciphering and integrity protection, registration management, connection management, reachability management, mobility management, lawful intercept (for AMF 155 events and interface to LI system), provide transport for session management, SM messages between UE 100 and SMF 160, transparent proxy for routing SM messages, access authentication, access authorization, provide transport for SMS messages between UE 100 and SMSF, security anchor function, SEA, interaction with the AUSF 150 and the UE 100, receiving the intermediate key established as a result of the UE 100 authentication process, security context management, SCM, that receives a key from the SEA that it uses to derive access network specific keys, and/or the like.

In an example, the AMF 155 may support non-3GPP access networks through N2 interface with N3IWF 170, NAS signaling with a UE 100 over N3IWF 170, authentication of UEs connected over N3IWF 170, management of mobility, authentication, and separate security context state(s) of a UE 100 connected via non-3GPP access 165 or connected via 3GPP access 105 and non-3GPP access 165 simultaneously, support of a coordinated RM context valid over 3GPP access 105 and non 3GPP access 165, support of CM management contexts for the UE 100 for connectivity over non-3GPP access, and/or the like.

In an example, an AMF 155 region may comprise one or multiple AMF 155 sets. The AMF 155 set may comprise some AMF 155 that serve a given area and/or network slice(s). In an example, multiple AMF 155 sets may be per AMF 155 region and/or network slice(s). Application identifier may be an identifier that may be mapped to a specific application traffic detection rule. Configured NSSAI may be an NSSAI that may be provisioned in a UE 100. DN 115 access identifier (DNAI), for a DNN, may be an identifier of a user plane access to a DN 115. Initial registration may be related to a UE 100 registration in RM-DEREGISTERED 500, 520 states. N2AP UE 100 association may be a logical per UE 100 association between a 5G AN node and an AMF 155. N2AP UE-TNLA-binding may be a binding between a N2AP UE 100 association and a specific transport network layer, TNL association for a given UE 100.

In an example, session management function, SMF 160, may include one or more of the following functionalities (one or more of the SMF 160 functionalities may be supported in a single instance of a SMF 160): session management (e.g. session establishment, modify and release, including tunnel maintain between UPF 110 and AN 105 node), UE 100 IP address allocation & management (including optional authorization), selection and control of UP function(s), configuration of traffic steering at UPF 110 to route traffic to proper destination, termination of interfaces towards policy control functions, control part of policy enforcement and QoS. lawful intercept (for SM events and interface to LI System), termination of SM parts of NAS messages, downlink data notification, initiation of AN specific SM information, sent via AMF 155 over N2 to (R)AN 105, determination of SSC mode of a session, roaming functionality, handling local enforcement to apply QoS SLAs (VPLMN), charging data collection and charging interface (VPLMN), lawful intercept (in VPLMN for SM events and interface to LI System), support for interaction with external DN 115 for transport of signaling for PDU session authorization/authentication by external DN 115, and/or the like.

In an example, a user plane function, UPF 110, may include one or more of the following functionalities (some of the UPF 110 functionalities may be supported in a single instance of a UPF 110): anchor point for Intra-/Inter-RAT mobility (when applicable), external PDU session point of interconnect to DN 115, packet routing & forwarding, packet inspection and user plane part of policy rule enforcement, lawful intercept (UP collection), traffic usage reporting, uplink classifier to support routing traffic flows to a data network, branching point to support multi-homed PDU session(s), QoS handling for user plane, uplink traffic verification (SDF to QoS flow mapping), transport level packet marking in the uplink and downlink, downlink packet buffering, downlink data notification triggering, and/or the like.

In an example, the UE 100 IP address management may include allocation and release of the UE 100 IP address and/or renewal of the allocated IP address. The UE 100 may set a requested PDU type during a PDU session establishment procedure based on its IP stack capabilities and/or configuration. In an example, the SMF 160 may select PDU type of a PDU session. In an example, if the SMF 160 receives a request with PDU type set to IP, the SMF 160 may select PDU type IPv4 or IPv6 based on DNN configuration and/or operator policies. In an example, the SMF 160 may provide a cause value to the UE 100 to indicate whether the other IP version is supported on the DNN. In an example, if the SMF 160 receives a request for PDU type IPv4 or IPv6 and the requested IP version is supported by the DNN the SMF 160 may select the requested PDU type.

In an example embodiment, the 5GC elements and UE 100 may support the following mechanisms: during a PDU session establishment procedure, the SMF 160 may send the IP address to the UE 100 via SM NAS signaling. The IPv4 address allocation and/or IPv4 parameter configuration via DHCPv4 may be employed once PDU session may be established. IPv6 prefix allocation may be supported via IPv6 stateless autoconfiguration, if IPv6 is supported. In an example, 5GC network elements may support IPv6 parameter configuration via stateless DHCPv6.

The 5GC may support the allocation of a static IPv4 address and/or a static IPv6 prefix based on subscription information in a UDM 140 and/or based on the configuration on a per-subscriber, per-DNN basis.

User plane function(s) (UPF 110) may handle the user plane path of PDU sessions. A UPF 110 that provides the interface to a data network may support functionality of a PDU session anchor.

In an example, a policy control function, PCF 135, may support unified policy framework to govern network behavior, provide policy rules to control plane function(s) to enforce policy rules, implement a front end to access subscription information relevant for policy decisions in a user data repository (UDR), and/or the like.

A network exposure function, NEF 125, may provide means to securely expose the services and capabilities provided by the 3GPP network functions, translate between information exchanged with the AF 145 and information exchanged with the internal network functions, receive information from other network functions, and/or the like.

In an example, a network repository function, NRF 130 may support service discovery function that may receive NF discovery request from NF instance, provide information about the discovered NF instances (be discovered) to the NF instance, and maintain information about available NF instances and their supported services, and/or the like.

In an example, an NSSF 120 may select a set of network slice instances serving the UE 100, may determine allowed NSSAI. In an example, the NSSF 120 may determine the AMF 155 set to be employed to serve the UE 100, and/or, based on configuration, determine a list of candidate AMF 155(s) 155 by querying the NRF 130.

In an example, stored data in a UDR may include at least user subscription data, including at least subscription identifiers, security credentials, access and mobility related subscription data, session related subscription data, policy data, and/or the like.

In an example, an AUSF 150 may support authentication server function (AUSF 150).

In an example, an application function (AF), AF 145, may interact with the 3GPP core network to provide services. In an example, based on operator deployment, application functions may be trusted by the operator to interact directly with relevant network functions. Application functions not allowed by the operator to access directly the network functions may use an external exposure framework (e.g., via the NEF 125) to interact with relevant network functions.

In an example, control plane interface between the (R)AN 105 and the 5G core may support connection of multiple different kinds of AN(s) (e.g. 3GPP RAN 105, N3IWF 170 for Un-trusted access 165) to the 5GC via a control plane protocol. In an example, an N2 AP protocol may be employed for both the 3GPP access 105 and non-3GPP access 165. In an example, control plane interface between the (R)AN 105 and the 5G core may support decoupling between AMF 155 and other functions such as SMF 160 that may need to control the services supported by AN(s) (e.g. control of the UP resources in the AN 105 for a PDU session).

In an example, the 5GC may provide policy information from the PCF 135 to the UE 100. In an example, the policy information may comprise: access network discovery and selection policy, UE 100 route selection policy (URSP), SSC mode selection policy (SSCMSP), network slice selection policy (NSSP), DNN selection policy, non-seamless offload policy, and/or the like.

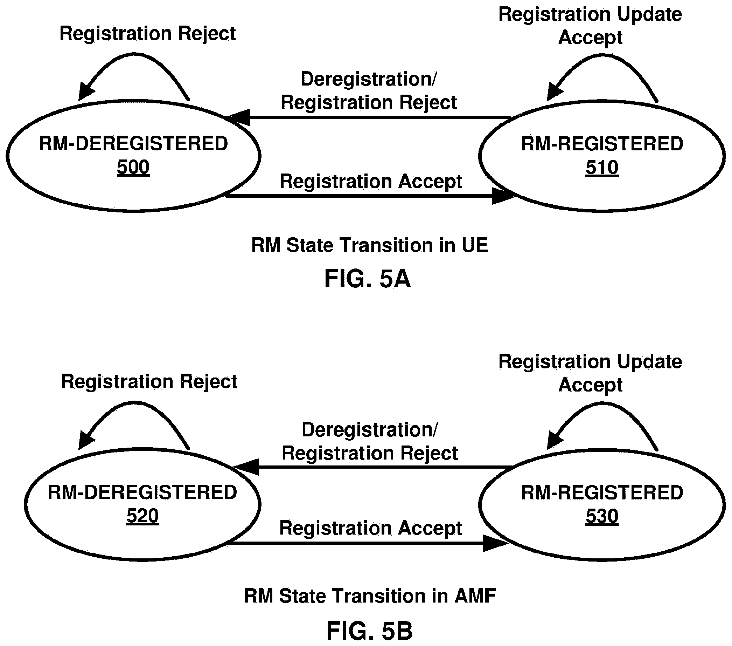

In an example, as depicted in example FIG. 5A and FIG. 5B, the registration management, RM may be employed to register or de-register a UE/user 100 with the network and establish the user context in the network. Connection management may be employed to establish and release the signaling connection between the UE 100 and the AMF 155.

In an example, a UE 100 may register with the network to receive services that require registration. In an example, the UE 100 may update its registration with the network periodically in order to remain reachable (periodic registration update), or upon mobility (e.g., mobility registration update), or to update its capabilities or to re-negotiate protocol parameters.

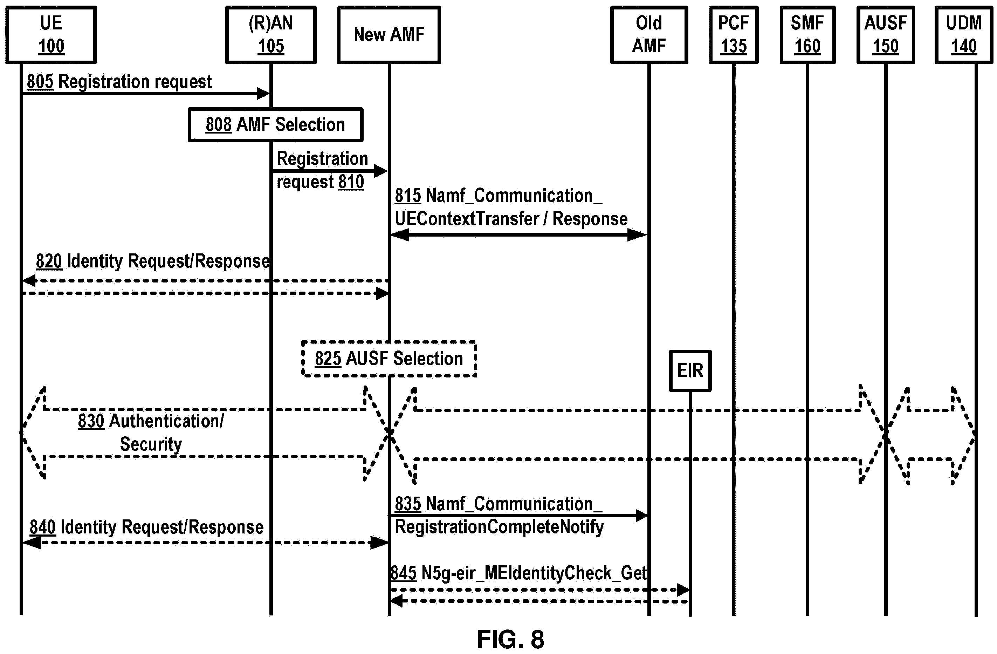

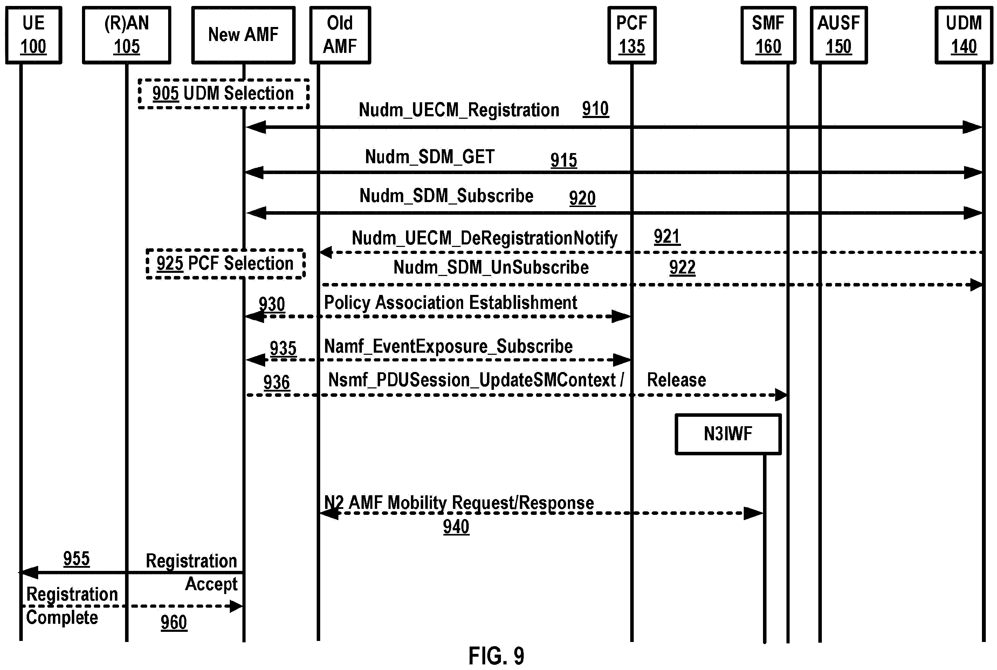

In an example, an initial registration procedure as depicted in example FIG. 8 and FIG. 9 may involve execution of network access control functions (e.g. user authentication and access authorization based on subscription profiles in UDM 140). Example FIG. 9 is a continuation of the initial registration procedure depicted in FIG. 8. As a result of the initial registration procedure, the identity of the serving AMF 155 may be registered in a UDM 140.

In an example, the registration management, RM procedures may be applicable over both 3GPP access 105 and non 3GPP access 165.

An example FIG. 5A may depict the RM states of a UE 100 as observed by the UE 100 and AMF 155. In an example embodiment, two RM states may be employed in the UE 100 and the AMF 155 that may reflect the registration status of the UE 100 in the selected PLMN: RM-DEREGISTERED 500, and RM-REGISTERED 510. In an example, in the RM DEREGISTERED state 500, the UE 100 may not be registered with the network. The UE 100 context in the AMF 155 may not hold valid location or routing information for the UE 100 so the UE 100 may not be reachable by the AMF 155. In an example, the UE 100 context may be stored in the UE 100 and the AMF 155. In an example, in the RM REGISTERED state 510, the UE 100 may be registered with the network. In the RM-REGISTERED 510 state, the UE 100 may receive services that may require registration with the network.

In an example embodiment, two RM states may be employed in AMF 155 for the UE 100 that may reflect the registration status of the UE 100 in the selected PLMN: RM-DEREGISTERED 520, and RM-REGISTERED 530.

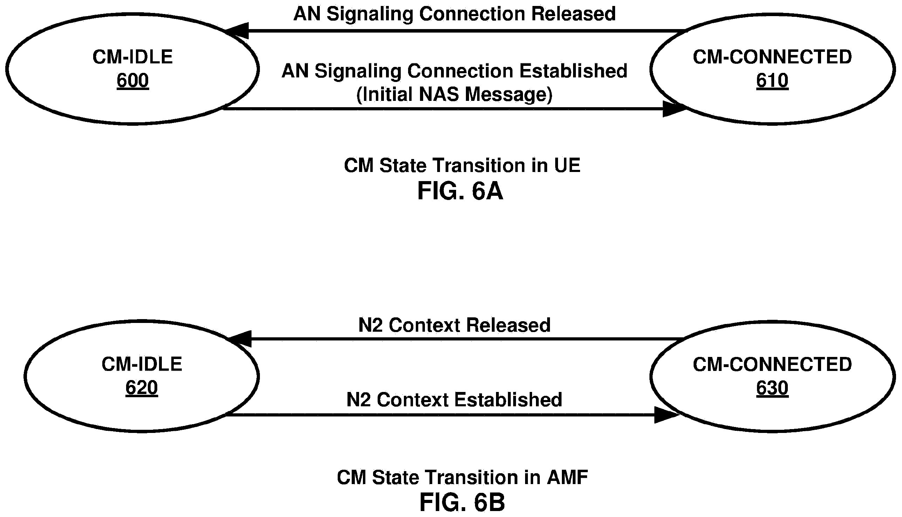

As depicted in example FIG. 6A and FIG. 6B, connection management, CM, may comprise establishing and releasing a signaling connection between a UE 100 and an AMF 155 over N1 interface. The signaling connection may be employed to enable NAS signaling exchange between the UE 100 and the core network. The signaling connection between the UE 100 and the AMF 155 may comprise both the AN signaling connection between the UE 100 and the (R)AN 105 (e.g. RRC connection over 3GPP access) and the N2 connection for the UE 100 between the AN and the AMF 155. In an example, the signaling connection may be a N1 signaling connection. In an example, the signaling connection may be a N1 NAS signaling connection.

As depicted in example FIG. 6A and FIG. 6B, two CM states may be employed for the NAS signaling connectivity of the UE 100 with the AMF 155, CM-IDLE 600, 620 and CM-CONNECTED 610, 630. A UE 100 in CM-IDLE 600 state may be in RM-REGISTERED 510 state and may have no NAS signaling connection established with the AMF 155 over N1. The UE 100 in CM-IDLE 600 state may be in RRC idle state. The UE 100 may perform cell selection, cell reselection, PLMN selection, and/or the like. A UE 100 in CM-CONNECTED 610 state may have a NAS signaling connection with the AMF 155 over N1. In an example, the UE 100 in CM-CONNTED 610 state may be an RRC connected state. The UE 100 in CM-CONNTECTED 610 state may be an RRC inactive state. In an example, a CM state in an AMF and a CM state in a UE may be different. This may be a case when a local state change happens without explicit signaling procedure (e.g., UE context release procedure) between the UE and the AMF. In an example, an RRC state in a UE (e.g., wireless device) and an RRC state in a base station (e.g., gNB, eNB) may be different. This may be a case when a local state change happens without explicit signaling procedure (e.g., RRC release procedure) between the UE and the base station.

In an example embodiment two CM states may be employed for the UE 100 at the AMF 155, CM-IDLE 620 and CM-CONNECTED 630.

In an example, an RRC inactive state may apply to NG-RAN (e.g. it may apply to NR and E-UTRA connected to 5G CN). The AMF 155, based on network configuration, may provide assistance information to the NG RAN 105, to assist the NG RAN's 105 decision whether the UE 100 may be sent to RRC inactive state. When a UE 100 is CM-CONNECTED 610 with RRC inactive state, the UE 100 may resume the RRC connection due to uplink data pending, mobile initiated signaling procedure, as a response to RAN 105 paging, to notify the network that it has left the RAN 105 notification area, and/or the like.

In an example, a NAS signaling connection management may include establishing and releasing a NAS signaling connection. A NAS signaling connection establishment function may be provided by the UE 100 and the AMF 155 to establish the NAS signaling connection for the UE 100 in CM-IDLE 600 state. The procedure of releasing the NAS signaling connection may be initiated by the 5G (R)AN 105 node or the AMF 155.

In an example, reachability management of a UE 100 may detect whether the UE 100 is reachable and may provide the UE 100 location (e.g. access node) to the network to reach the UE 100. Reachability management may be done by paging the UE 100 and the UE 100 location tracking. The UE 100 location tracking may include both UE 100 registration area tracking and UE 100 reachability tracking. The UE 100 and the AMF 155 may negotiate UE 100 reachability characteristics in CM-IDLE 600, 620 state during registration and registration update procedures.

In an example, two UE 100 reachability categories may be negotiated between a UE 100 and an AMF 155 for CM-IDLE 600, 620 state. 1) UE 100 reachability allowing mobile device terminated data while the UE 100 is CM-IDLE 600 mode. 2) Mobile initiated connection only (MICO) mode. The 5GC may support a PDU connectivity service that provides exchange of PDUs between the UE 100 and a data network identified by a DNN. The PDU connectivity service may be supported via PDU sessions that are established upon request from the UE 100.

In an example, a PDU session may support one or more PDU session types. PDU sessions may be established (e.g. upon UE 100 request), modified (e.g. upon UE 100 and 5GC request) and/or released (e.g. upon UE 100 and 5GC request) using NAS SM signaling exchanged over N1 between the UE 100 and the SMF 160. Upon request from an application server, the 5GC may be able to trigger a specific application in the UE 100. When receiving the trigger, the UE 100 may send it to the identified application in the UE 100. The identified application in the UE 100 may establish a PDU session to a specific DNN.

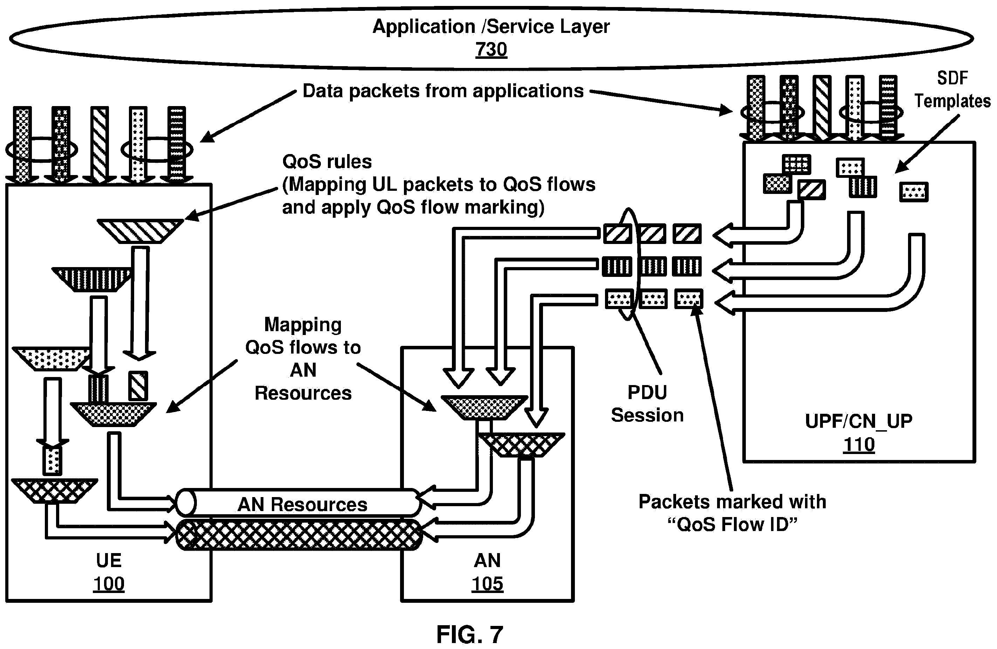

In an example, the 5G QoS model may support a QoS flow based framework as depicted in example FIG. 7. The 5G QoS model may support both QoS flows that require a guaranteed flow bit rate and QoS flows that may not require a guaranteed flow bit rate. In an example, the 5G QoS model may support reflective QoS. The QoS model may comprise flow mapping or packet marking at the UPF 110 (CN_UP) 110, AN 105 and/or the UE 100. In an example, packets may arrive from and/or destined to the application/service layer 730 of UE 100, UPF 110 (CN_UP) 110, and/or the AF 145.

In an example, the QoS flow may be a granularity of QoS differentiation in a PDU session. A QoS flow ID, QFI, may be employed to identify the QoS flow in the 5G system. In an example, user plane traffic with the same QFI within a PDU session may receive the same traffic forwarding treatment. The QFI may be carried in an encapsulation header on N3 and/or N9 (e.g. without any changes to the end-to-end packet header). In an example, the QFI may be applied to PDUs with different types of payload. The QFI may be unique within a PDU session.

In an example, the QoS parameters of a QoS flow may be provided to the (R)AN 105 as a QoS profile over N2 at PDU session establishment, QoS flow establishment, or when NG-RAN is used at every time the user plane is activated. In an example, a default QoS rule may be required for every PDU session. The SMF 160 may allocate the QFI for a QoS flow and may derive QoS parameters from the information provided by the PCF 135. In an example, the SMF 160 may provide the QFI together with the QoS profile containing the QoS parameters of a QoS flow to the (R)AN 105.

In an example, 5G QoS flow may be a granularity for QoS forwarding treatment in the 5G system. Traffic mapped to the same 5G QoS flow may receive the same forwarding treatment (e.g. scheduling policy, queue management policy, rate shaping policy, RLC configuration, and/or the like). In an example, providing different QoS forwarding treatment may require separate 5G QoS flows.

In an example, a 5G QoS indicator may be a scalar that may be employed as a reference to a specific QoS forwarding behavior (e.g. packet loss rate, packet delay budget) to be provided to a 5G QoS flow. In an example, the 5G QoS indicator may be implemented in the access network by the 5QI referencing node specific parameters that may control the QoS forwarding treatment (e.g. scheduling weights, admission thresholds, queue management thresholds, link layer protocol configuration, and/or the like.).

In an example, edge computing may provide compute and storage resources with adequate connectivity close to the devices generating traffic.

In an example, 5GC may support edge computing and may enable operator(s) and 3rd party services to be hosted close to the UE's access point of attachment. The 5G core network may select a UPF 110 close to the UE 100 and may execute the traffic steering from the UPF 110 to the local data network via a N6 interface. In an example, the selection and traffic steering may be based on the UE's 100 subscription data, UE 100 location, the information from application function AF 145, policy, other related traffic rules, and/or the like. In an example, the 5G core network may expose network information and capabilities to an edge computing application function. The functionality support for edge computing may include local routing where the 5G core network may select a UPF 110 to route the user traffic to the local data network, traffic steering where the 5G core network may select the traffic to be routed to the applications in the local data network, session and service continuity to enable UE 100 and application mobility, user plane selection and reselection, e.g. based on input from application function, network capability exposure where 5G core network and application function may provide information to each other via NEf 125, QoS and charging where PCF 135 may provide rules for QoS control and charging for the traffic routed to the local data network, support of local area data network where 5G core network may provide support to connect to the LADN in a certain area where the applications are deployed, and/or the like.

An example 5G system may be a 3GPP system comprising of 5G access network 105, 5G core network and a UE 100, and/or the like. Allowed NSSAI may be an NSSAI provided by a serving PLMN during e.g. a registration procedure, indicating the NSSAI allowed by the network for the UE 100 in the serving PLMN for the current registration area.

In an example, a PDU connectivity service may provide exchange of PDUs between a UE 100 and a data network. A PDU session may be an association between the UE 100 and the data network, DN 115, that may provide the PDU connectivity service. The type of association may be IP, Ethernet and/or unstructured.

Establishment of user plane connectivity to a data network via network slice instance(s) may comprise the following: performing a RM procedure to select an AMF 155 that supports the required network slices, and establishing one or more PDU session(s) to the required data network via the network slice instance(s).

In an example, the set of network slices for a UE 100 may be changed at any time while the UE 100 may be registered with the network, and may be initiated by the network, or the UE 100.

In an example, a periodic registration update may be UE 100 re-registration at expiry of a periodic registration timer. A requested NSSAI may be a NSSAI that the UE 100 may provide to the network.

In an example, a service based interface may represent how a set of services may be provided/exposed by a given NF.

In an example, a service continuity may be an uninterrupted user experience of a service, including the cases where the IP address and/or anchoring point may change. In an example, a session continuity may refer to continuity of a PDU session. For PDU session of IP type session continuity may imply that the IP address is preserved for the lifetime of the PDU session. An uplink classifier may be a UPF 110 functionality that aims at diverting uplink traffic, based on filter rules provided by the SMF 160, towards data network, DN 115.

In an example, the 5G system architecture may support data connectivity and services enabling deployments to use techniques such as e.g. network function virtualization and/or software defined networking. The 5G system architecture may leverage service-based interactions between control plane (CP) network functions where identified. In 5G system architecture, separation of the user plane (UP) functions from the control plane functions may be considered. A 5G system may enable a network function to interact with other NF(s) directly if required.

In an example, the 5G system may reduce dependencies between the access network (AN) and the core network (CN). The architecture may comprise a converged access-agnostic core network with a common AN - CN interface which may integrate different 3GPP and non-3GPP access types.

In an example, the 5G system may support a unified authentication framework, stateless NFs, where the compute resource is decoupled from the storage resource, capability exposure, and concurrent access to local and centralized services. To support low latency services and access to local data networks, UP functions may be deployed close to the access network.

In an example, the 5G system may support roaming with home routed traffic and/or local breakout traffic in the visited PLMN. An example 5G architecture may be service-based and the interaction between network functions may be represented in two ways. (1) As service-based representation (depicted in example FIG. 1), where network functions within the control plane, may enable other authorized network functions to access their services. This representation may also include point-to-point reference points where necessary. (2) Reference point representation, showing the interaction between the NF services in the network functions described by point-to-point reference point (e.g. N11) between any two network functions.

In an example, a network slice may comprise the core network control plane and user plane network functions, the 5G Radio Access Network; the N3IWF functions to the non-3GPP Access Network, and/or the like. Network slices may differ for supported features and network function implementation. The operator may deploy multiple network slice instances delivering the same features but for different groups of UEs, e.g. as they deliver a different committed service and/or because they may be dedicated to a customer. The NSSF 120 may store the mapping information between slice instance ID and NF ID (or NF address).

In an example, a UE 100 may simultaneously be served by one or more network slice instances via a 5G-AN. In an example, the UE 100 may be served by k network slices (e.g. k=8, 16, etc.) at a time. An AMF 155 instance serving the UE 100 logically may belong to a network slice instance serving the UE 100.

In an example, a PDU session may belong to one specific network slice instance per PLMN. In an example, different network slice instances may not share a PDU session. Different slices may have slice-specific PDU sessions using the same DNN.

An S-NSSAI (Single Network Slice Selection Assistance information) may identify a network slice. An S-NSSAI may comprise a slice/service type (SST), which may refer to the expected network slice behavior in terms of features and services; and/or a slice differentiator (SD). A slice differentiator may be optional information that may complement the slice/service type(s) to allow further differentiation for selecting a network slice instance from potentially multiple network slice instances that comply with the indicated slice/service type. In an example, the same network slice instance may be selected employing different S-NSSAIs. The CN part of a network slice instance(s) serving a UE 100 may be selected by CN.

In an example, subscription data may include the S-NSSAI(s) of the network slices that the UE 100 subscribes to. One or more S-NSSAIs may be marked as default S-NSSAI. In an example, k S-NSSAI may be marked default S-NSSAI (e.g. k=8, 16, etc.). In an example, the UE 100 may subscribe to more than 8 S-NSSAIs.

In an example, a UE 100 may be configured by the HPLMN with a configured NSSAI per PLMN. Upon successful completion of a UE's registration procedure, the UE 100 may obtain from the AMF 155 an Allowed NSSAI for this PLMN, which may include one or more S-NSSAIs.

In an example, the Allowed NSSAI may take precedence over the configured NSSAI for a PLMN. The UE 100 may use the S-NSSAIs in the allowed NSSAI corresponding to a network slice for the subsequent network slice selection related procedures in the serving PLMN.

In an example, the establishment of user plane connectivity to a data network via a network slice instance(s) may comprise: performing a RM procedure to select an AMF 155 that may support the required network slices, establishing one or more PDU sessions to the required data network via the network slice instance(s), and/or the like.

In an example, when a UE 100 registers with a PLMN, if the UE 100 for the PLMN has a configured NSSAI or an allowed NSSAI, the UE 100 may provide to the network in RRC and NAS layer a requested NSSAI comprising the S-NSSAI(s) corresponding to the slice(s) to which the UE 100 attempts to register, a temporary user ID if one was assigned to the UE, and/or the like. The requested NSSAI may be configured-NSSAI, allowed-NSSAI, and/or the like.

In an example, when a UE 100 registers with a PLMN, if for the PLMN the UE 100 has no configured NSSAI or allowed NSSAI, the RAN 105 may route NAS signaling from/to the UE 100 to/from a default AMF 155.

In an example, the network, based on local policies, subscription changes and/or UE 100 mobility, may change the set of permitted network slice(s) to which the UE 100 is registered. In an example, the network may perform the change during a registration procedure or trigger a notification towards the UE 100 of the change of the supported network slices using an RM procedure (which may trigger a registration procedure). The network may provide the UE 100 with a new allowed NSSAI and tracking area list.

In an example, during a registration procedure in a PLMN, in case the network decides that the UE 100 should be served by a different AMF 155 based on network slice(s) aspects, the AMF 155 that first received the registration request may redirect the registration request to another AMF 155 via the RAN 105 or via direct signaling between the initial AMF 155 and the target AMF 155.

In an example, the network operator may provision the UE 100 with network slice selection policy (NSSP). The NSSP may comprise one or more NSSP rules.

In an example, if a UE 100 has one or more PDU sessions established corresponding to a specific S-NSSAI, the UE 100 may route the user data of the application in one of the PDU sessions, unless other conditions in the UE 100 may prohibit the use of the PDU sessions. If the application provides a DNN, then the UE 100 may consider the DNN to determine which PDU session to use. In an example, if the UE 100 does not have a PDU session established with the specific S-NSSAI, the UE 100 may request a new PDU session corresponding to the S-NSSAI and with the DNN that may be provided by the application. In an example, in order for the RAN 105 to select a proper resource for supporting network slicing in the RAN 105, the RAN 105 may be aware of the network slices used by the UE 100.

In an example, an AMF 155 may select an SMF 160 in a network slice instance based on S-NSSAI, DNN and/or other information e.g. UE 100 subscription and local operator policies, and/or the like, when the UE 100 triggers the establishment of a PDU session. The selected SMF 160 may establish the PDU session based on S-NSSAI and DNN.

In an example, in order to support network-controlled privacy of slice information for the slices the UE 100 may access, when the UE 100 is aware or configured that privacy considerations may apply to NSSAI, the UE 100 may not include NSSAI in NAS signaling unless the UE 100 has a NAS security context and the UE 100 may not include NSSAI in unprotected RRC signaling.

In an example, for roaming scenarios, the network slice specific network functions in VPLMN and HPLMN may be selected based on the S-NSSAI provided by the UE 100 during PDU connection establishment. If a standardized S-NSSAI is used, selection of slice specific NF instances may be done by each PLMN based on the provided S-NSSAI. In an example, the VPLMN may map the S-NSSAI of HPLMN to a S-NSSAI of VPLMN based on roaming agreement (e.g., including mapping to a default S-NSSAI of VPLMN). In an example, the selection of slice specific NF instance in VPLMN may be done based on the S-NSSAI of VPLMN. In an example, the selection of any slice specific NF instance in HPLMN may be based on the S-NSSAI of HPLMN.

As depicted in example FIG. 8 and FIG. 9, a registration procedure may be performed by the UE 100 to get authorized to receive services, to enable mobility tracking, to enable reachability, and/or the like.

In an example, the UE 100 may send to the (R)AN 105 an AN message 805 (comprising AN parameters, RM-NAS registration request (registration type, SUCI or SUPI or 5G-GUTI, last visited TAI (if available), security parameters, requested NSSAI, mapping of requested NSSAI, UE 100 5GC capability, PDU session status, PDU session(s) to be re-activated, Follow on request, MICO mode preference, and/or the like), and/or the like). In an example, in case of NG-RAN, the AN parameters may include e.g. SUCI or SUPI or the 5G-GUTI, the Selected PLMN ID and requested NSSAI, and/or the like. In an example, the AN parameters may comprise establishment cause. The establishment cause may provide the reason for requesting the establishment of an RRC connection. In an example, the registration type may indicate if the UE 100 wants to perform an initial registration (e.g. the UE 100 is in RM-DEREGISTERED state), a mobility registration update (e.g., the UE 100 is in RM-REGISTERED state and initiates a registration procedure due to mobility), a periodic registration update (e.g., the UE 100 is in RM-REGISTERED state and may initiate a registration procedure due to the periodic registration update timer expiry) or an emergency registration (e.g., the UE 100 is in limited service state). In an example, if the UE 100 performing an initial registration (e.g., the UE 100 is in RM-DEREGISTERED state) to a PLMN for which the UE 100 does not already have a 5G-GUTI, the UE 100 may include its SUCI or SUPI in the registration request. The SUCI may be included if the home network has provisioned the public key to protect SUPI in the UE. If the UE 100 received a UE 100 configuration update command indicating that the UE 100 needs to re-register and the 5G-GUTI is invalid, the UE 100 may perform an initial registration and may include the SUPI in the registration request message. For an emergency registration, the SUPI may be included if the UE 100 does not have a valid 5G-GUTI available; the PEI may be included when the UE 100 has no SUPI and no valid 5G-GUTI. In other cases, the 5G-GUTI may be included and it may indicate the last serving AMF 155. If the UE 100 is already registered via a non-3GPP access in a PLMN different from the new PLMN (e.g., not the registered PLMN or an equivalent PLMN of the registered PLMN) of the 3GPP access, the UE 100 may not provide over the 3GPP access the 5G-GUTI allocated by the AMF 155 during the registration procedure over the non-3GPP access. If the UE 100 is already registered via a 3GPP access in a PLMN (e.g., the registered PLMN), different from the new PLMN (e.g. not the registered PLMN or an equivalent PLMN of the registered PLMN) of the non-3GPP access, the UE 100 may not provide over the non-3GPP access the 5G-GUTI allocated by the AMF 155 during the registration procedure over the 3GPP access. The UE 100 may provide the UE's usage setting based on its configuration. In case of initial registration or mobility registration update, the UE 100 may include the mapping of requested NSSAI, which may be the mapping of each S-NSSAI of the requested NSSAI to the S-NSSAIs of the configured NSSAI for the HPLMN, to ensure that the network is able to verify whether the S-NSSAI(s) in the requested NSSAI are permitted based on the subscribed S-NSSAIs. If available, the last visited TAI may be included in order to help the AMF 155 produce registration area for the UE. In an example, the security parameters may be used for authentication and integrity protection. requested NSSAI may indicate the network slice selection assistance information. The PDU session status may indicates the previously established PDU sessions in the UE. When the UE 100 is connected to the two AMF 155 belonging to different PLMN via 3GPP access and non-3GPP access then the PDU session status may indicate the established PDU session of the current PLMN in the UE. The PDU session(s) to be re-activated may be included to indicate the PDU session(s) for which the UE 100 may intend to activate UP connections. A PDU session corresponding to a LADN may not be included in the PDU session(s) to be re-activated when the UE 100 is outside the area of availability of the LADN. The follow on request may be included when the UE 100 may have pending uplink signaling and the UE 100 may not include PDU session(s) to be re-activated, or the registration type may indicate the UE 100 may want to perform an emergency registration.

In an example, if a SUPI is included or the 5G-GUTI does not indicate a valid AMF 155, the (R)AN 105, based on (R)AT and requested NSSAI, if available, may selects 808 an AMF 155. If UE 100 is in CM-CONNECTED state, the (R)AN 105 may forward the registration request message to the AMF 155 based on the N2 connection of the UE. If the (R)AN 105 may not select an appropriate AMF 155, it may forward the registration request to an AMF 155 which has been configured, in (R)AN 105, to perform AMF 155 selection 808.

In an example, the (R)AN 105 may send to the new AMF 155 an N2 message 810 (comprising: N2 parameters, RM-NAS registration request (registration type, SUPI or 5G-GUTI, last visited TAI (if available), security parameters, requested NSSAI, mapping of requested NSSAI, UE 100 5GC capability, PDU session status, PDU session(s) to be re-activated, follow on request, and MICO mode preference), and/or the like). In an example, when NG-RAN is used, the N2 parameters may comprise the selected PLMN ID, location information, cell identity and the RAT type related to the cell in which the UE 100 is camping. In an example, when NG-RAN is used, the N2 parameters may include the establishment cause.

In an example, the new AMF 155 may send to the old AMF 155 a Namf_Communication_UEContextTransfer (complete registration request) 815. In an example, if the UE's 5G-GUTI was included in the registration request and the serving AMF 155 has changed since last registration procedure, the new AMF 155 may invoke the Namf_Communication_UEContextTransfer service operation 815 on the old AMF 155 including the complete registration request IE, which may be integrity protected, to request the UE's SUPI and MM Context. The old AMF 155 may use the integrity protected complete registration request IE to verify if the context transfer service operation invocation corresponds to the UE 100 requested. In an example, the old AMF 155 may transfer the event subscriptions information by each NF consumer, for the UE, to the new AMF 155. In an example, if the UE 100 identifies itself with PEI, the SUPI request may be skipped.

In an example, the old AMF 155 may send to new AMF 155 a response 815 to Namf_Communication_UEContextTransfer (SUPI, MM context, SMF 160 information, PCF ID). In an example, the old AMF 155 may respond to the new AMF 155 for the Namf_Communication_UEContextTransfer invocation by including the UE's SUPI and MM context. In an example, if old AMF 155 holds information about established PDU sessions, the old AMF 155 may include SMF 160 information including S-NSSAI(s), SMF 160 identities and PDU session ID. In an example, if old AMF 155 holds information about active NGAP UE-TNLA bindings to N3IWF, the old AMF 155 may include information about the NGAP UE-TNLA bindings.

In an example, if the SUPI is not provided by the UE 100 nor retrieved from the old AMF 155 the identity request procedure 820 may be initiated by the AMF 155 sending an identity request message to the UE 100 requesting the SUCI.

In an example, the UE 100 may respond with an identity response message 820 including the SUCI. The UE 100 may derive the SUCI by using the provisioned public key of the HPLMN.

In an example, the AMF 155 may decide to initiate UE 100 authentication 825 by invoking an AUSF 150. The AMF 155 may select an AUSF 150 based on SUPI or SUCI. In an example, if the AMF 155 is configured to support emergency registration for unauthenticated SUPIs and the UE 100 indicated registration type emergency registration the AMF 155 may skip the authentication and security setup or the AMF 155 may accept that the authentication may fail and may continue the registration procedure.

In an example, the authentication 830 may be performed by Nudm_UEAuthenticate_Get operation. The AUSF 150 may discover a UDM 140. In case the AMF 155 provided a SUCI to AUSF 150, the AUSF 150 may return the SUPI to AMF 155 after the authentication is successful. In an example, if network slicing is used, the AMF 155 may decide if the registration request needs to be rerouted where the initial AMF 155 refers to the AMF 155. In an example, the AMF 155 may initiate NAS security functions. In an example, upon completion of NAS security function setup, the AMF 155 may initiate NGAP procedure to enable 5G-AN use it for securing procedures with the UE. In an example, the 5G-AN may store the security context and may acknowledge to the AMF 155. The 5G-AN may use the security context to protect the messages exchanged with the UE.

In an example, new AMF 155 may send to the old AMF 155 Namf_Communication_RegistrationCompleteNotify 835. If the AMF 155 has changed, the new AMF 155 may notify the old AMF 155 that the registration of the UE 100 in the new AMF 155 may be completed by invoking the Namf_Communication_RegistrationCompleteNotify service operation. If the authentication/security procedure fails, then the registration may be rejected, and the new AMF 155 may invoke the Namf_Communication_RegistrationCompleteNotify service operation with a reject indication reason code towards the old AMF 155. The old AMF 155 may continue as if the UE 100 context transfer service operation was never received. If one or more of the S-NSSAIs used in the old registration area may not be served in the target registration area, the new AMF 155 may determine which PDU session may not be supported in the new registration area. The new AMF 155 may invoke the Namf_Communication_RegistrationCompleteNotify service operation including the rejected PDU session ID and a reject cause (e.g. the S-NSSAI becomes no longer available) towards the old AMF 155. The new AMF 155 may modify the PDU session status correspondingly. The old AMF 155 may inform the corresponding SMF 160(s) to locally release the UE's SM context by invoking the Nsmf_PDUSession_ReleaseSMContext service operation.

In an example, the new AMF 155 may send to the UE 100 an identity request/response 840 (e.g., PEI). If the PEI was not provided by the UE 100 nor retrieved from the old AMF 155, the identity request procedure may be initiated by AMF 155 sending an identity request message to the UE 100 to retrieve the PEI. The PEI may be transferred encrypted unless the UE 100 performs emergency registration and may not be authenticated. For an emergency registration, the UE 100 may have included the PEI in the registration request.

In an example, the new AMF 155 may initiate ME identity check 845 by invoking the N5g-eir _EquipmentIdentityCheck_Get service operation 845.

In an example, the new AMF 155, based on the SUPI, may select 905 a UDM 140. The UDM 140 may select a UDR instance. In an example, the AMF 155 may select a UDM 140.

In an example, if the AMF 155 has changed since the last registration procedure, or if the UE 100 provides a SUPI which may not refer to a valid context in the AMF 155, or if the UE 100 registers to the same AMF 155 it has already registered to a non-3GPP access (e.g., the UE 100 is registered over a non-3GPP access and may initiate the registration procedure to add a 3GPP access), the new AMF 155 may register with the UDM 140 using Nudm_UECM_Registration 910 and may subscribe to be notified when the UDM 140 may deregister the AMF 155. The UDM 140 may store the AMF 155 identity associated to the access type and may not remove the AMF 155 identity associated to the other access type. The UDM 140 may store information provided at registration in UDR, by Nudr_UDM_Update. In an example, the AMF 155 may retrieve the access and mobility subscription data and SMF 160 selection subscription data using Nudm_SDM_Get 915. The UDM 140 may retrieve this information from UDR by Nudr_UDM_Query(access and mobility subscription data). After a successful response is received, the AMF 155 may subscribe to be notified using Nudm_SDM_Subscribe 920 when the data requested may be modified. The UDM 140 may subscribe to UDR by Nudr_UDM_Subscribe. The GPSI may be provided to the AMF 155 in the subscription data from the UDM 140 if the GPSI is available in the UE 100 subscription data. In an example, the new AMF 155 may provide the access type it serves for the UE 100 to the UDM 140 and the access type may be set to 3GPP access. The UDM 140 may store the associated access type together with the serving AMF 155 in UDR by Nudr_UDM_Update. The new AMF 155 may create an MM context for the UE 100 after getting the mobility subscription data from the UDM 140. In an example, when the UDM 140 stores the associated access type together with the serving AMF 155, the UDM 140 may initiate a Nudm_UECM_DeregistrationNotification 921 to the old AMF 155 corresponding to 3GPP access. The old AMF 155 may remove the MM context of the UE. If the serving NF removal reason indicated by the UDM 140 is initial registration, then the old AMF 155 may invoke the Namf_EventExposure_Notify service operation towards all the associated SMF 160s of the UE 100 to notify that the UE 100 is deregistered from old AMF 155. The SMF 160 may release the PDU session(s) on getting this notification. In an example, the old AMF 155 may unsubscribe with the UDM 140 for subscription data using Nudm_SDM_unsubscribe 922.

In an example, if the AMF 155 decides to initiate PCF 135 communication, e.g. the AMF 155 has not yet obtained access and mobility policy for the UE 100 or if the access and mobility policy in the AMF 155 are no longer valid, the AMF 155 may select 925 a PCF 135. If the new AMF 155 receives a PCF ID from the old AMF 155 and successfully contacts the PCF 135 identified by the PCF ID, the AMF 155 may select the (V-)PCF identified by the PCF ID. If the PCF 135 identified by the PCF ID may not be used (e.g. no response from the PCF 135) or if there is no PCF ID received from the old AMF 155, the AMF 155 may select 925 a PCF 135.

In an example, the new AMF 155 may perform a policy association establishment 930 during registration procedure. If the new AMF 155 contacts the PCF 135 identified by the (V-)PCF ID received during inter-AMF 155 mobility, the new AMF 155 may include the PCF-ID in the Npcf_AMPolicyControl Get operation. If the AMF 155 notifies the mobility restrictions (e.g. UE 100 location) to the PCF 135 for adjustment, or if the PCF 135 updates the mobility restrictions itself due to some conditions (e.g. application in use, time and date), the PCF 135 may provide the updated mobility restrictions to the AMF 155.

In an example, the PCF 135 may invoke Namf_EventExposure_Subscribe service operation 935 for UE 100 event subscription.

In an example, the AMF 155 may send to the SMF 160 an Nsmf_PDUSession_UpdateSMContext 936. In an example, the AMF 155 may invoke the Nsmf_PDUSession_UpdateSMContext if the PDU session(s) to be re-activated is included in the registration request. The AMF 155 may send Nsmf_PDUSession_UpdateSMContext request to SMF 160(s) associated with the PDU session(s) to activate user plane connections of the PDU session(s). The SMF 160 may decide to trigger e.g. the intermediate UPF 110 insertion, removal or change of PSA. In the case that the intermediate UPF 110 insertion, removal, or relocation is performed for the PDU session(s) not included in PDU session(s) to be re-activated, the procedure may be performed without N11 and N2 interactions to update the N3 user plane between (R)AN 105 and 5GC. The AMF 155 may invoke the Nsmf_PDUSession_ReleaseSMContext service operation towards the SMF 160 if any PDU session status indicates that it is released at the UE 100. The AMF 155 may invoke the Nsmf_PDUSession_ReleaseSMContext service operation towards the SMF 160 in order to release any network resources related to the PDU session.

In an example, the new AMF 155 may send to a N3IWF an N2 AMF 155 mobility request 940. If the AMF 155 has changed, the new AMF 155 may create an NGAP UE 100 association towards the N3IWF to which the UE 100 is connected. In an example, the N3IWF may respond to the new AMF 155 with an N2 AMF 155 mobility response 940.

In an example, the new AMF 155 may send to the UE 100 a registration accept 955 (comprising: 5G-GUTI, registration area, mobility restrictions, PDU session status, allowed NSSAI, [mapping of allowed NSSAI], periodic registration update timer, LADN information and accepted MICO mode, IMS voice over PS session supported indication, emergency service support indicator, and/or the like). In an example, the AMF 155 may send the registration accept message to the UE 100 indicating that the registration request has been accepted. 5G-GUTI may be included if the AMF 155 allocates a new 5G-GUTI. If the AMF 155 allocates a new registration area, it may send the registration area to the UE 100 via registration accept message 955. If there is no registration area included in the registration accept message, the UE 100 may consider the old registration area as valid. In an example, mobility restrictions may be included in case mobility restrictions may apply for the UE 100 and registration type may not be emergency registration. The AMF 155 may indicate the established PDU sessions to the UE 100 in the PDU session status. The UE 100 may remove locally any internal resources related to PDU sessions that are not marked as established in the received PDU session status. In an example, when the UE 100 is connected to the two AMF 155 belonging to different PLMN via 3GPP access and non-3GPP access then the UE 100 may remove locally any internal resources related to the PDU session of the current PLMN that are not marked as established in received PDU session status. If the PDU session status information was in the registration request, the AMF 155 may indicate the PDU session status to the UE. The mapping of allowed NSSAI may be the mapping of each S-NSSAI of the allowed NSSAI to the S-NSSAIs of the configured NSSAI for the HPLMN. The AMF 155 may include in the registration accept message 955 the LADN information for LADNs that are available within the registration area determined by the AMF 155 for the UE. If the UE 100 included MICO mode in the request, then AMF 155 may respond whether MICO mode may be used. The AMF 155 may set the IMS voice over PS session supported Indication. In an example, in order to set the IMS voice over PS session supported indication, the AMF 155 may perform a UE/RAN radio information and compatibility request procedure to check the compatibility of the UE 100 and RAN radio capabilities related to IMS voice over PS. In an example, the emergency service support indicator may inform the UE 100 that emergency services are supported, e.g., the UE 100 may request PDU session for emergency services. In an example, the handover restriction list and UE-AMBR may be provided to NG-RAN by the AMF 155.

In an example, the UE 100 may send to the new AMF 155 a registration complete 960 message. In an example, the UE 100 may send the registration complete message 960 to the AMF 155 to acknowledge that a new 5G-GUTI may be assigned. In an example, when information about the PDU session(s) to be re-activated is not included in the registration request, the AMF 155 may release the signaling connection with the UE 100. In an example, when the follow-on request is included in the registration request, the AMF 155 may not release the signaling connection after the completion of the registration procedure. In an example, if the AMF 155 is aware that some signaling is pending in the AMF 155 or between the UE 100 and the 5GC, the AMF 155 may not release the signaling connection after the completion of the registration procedure.

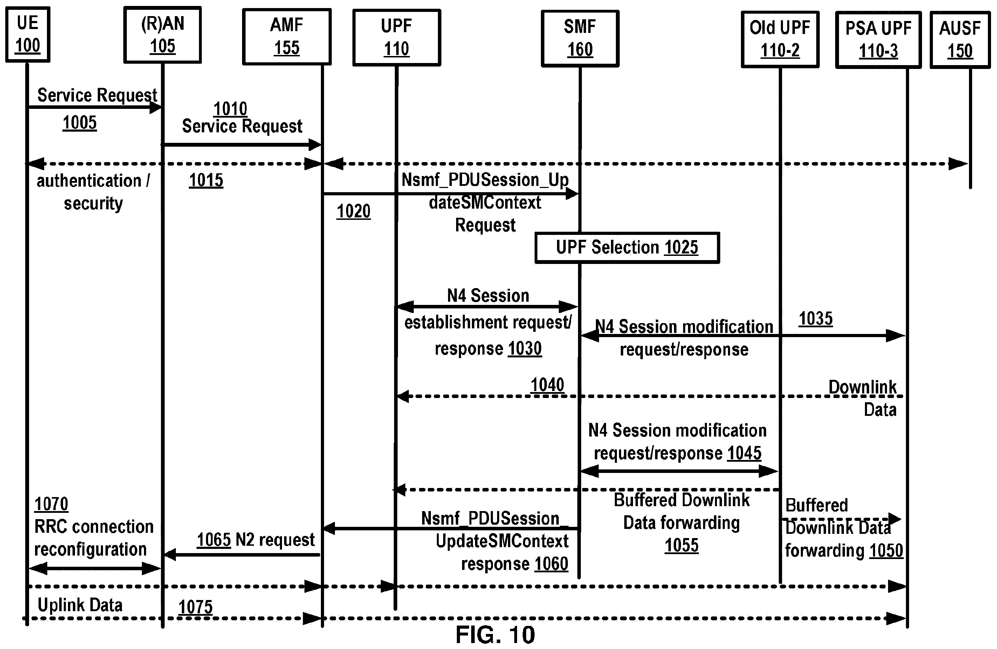

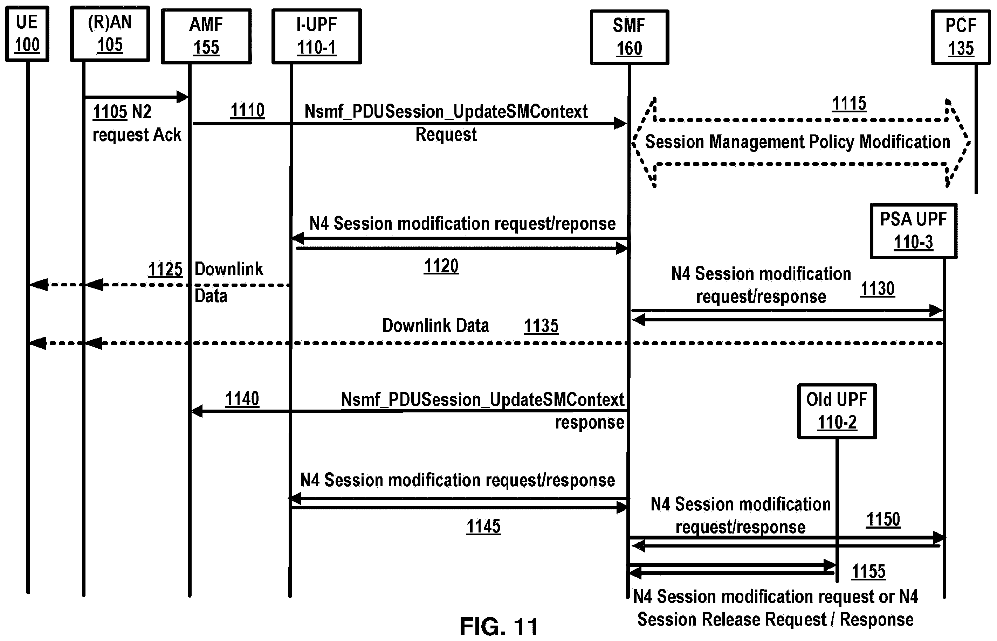

As depicted in example FIG. 10 and FIG. 11, a service request procedure e.g., a UE 100 triggered service request procedure may be used by a UE 100 in CM-IDLE state to request the establishment of a secure connection to an AMF 155. FIG. 11 is continuation of FIG. 10 depicting the service request procedure. The service request procedure may be used to activate a user plane connection for an established PDU session. The service request procedure may be triggered by the UE 100 or the 5GC, and may be used when the UE 100 is in CM-IDLE and/or in CM-CONNECTED and may allow selectively to activate user plane connections for some of the established PDU sessions.

In an example, a UE 100 in CM IDLE state may initiate the service request procedure to send uplink signaling messages, user data, and/or the like, as a response to a network paging request, and/or the like. In an example, after receiving the service request message, the AMF 155 may perform authentication. In an example, after the establishment of signaling connection to the AMF 155, the UE 100 or network may send signaling messages, e.g. PDU session establishment from the UE 100 to a SMF 160, via the AMF 155.

In an example, for any service request, the AMF 155 may respond with a service accept message to synchronize PDU session status between the UE 100 and network. The AMF 155 may respond with a service reject message to the UE 100, if the service request may not be accepted by the network. The service reject message may include an indication or cause code requesting the UE 100 to perform a registration update procedure. In an example, for service request due to user data, network may take further actions if user plane connection activation may not be successful. In an example FIG. 10 and FIG. 11, more than one UPF, e.g., old UPF 110-2 and PDU session Anchor PSA UPF 110-3 may be involved.

In an example, the UE 100 may send to a (R)AN 105 an AN message comprising AN parameters, mobility management, MM NAS service request 1005 (e.g., list of PDU sessions to be activated, list of allowed PDU sessions, security parameters, PDU session status, and/or the like), and/or the like. In an example, the UE 100 may provide the list of PDU sessions to be activated when the UE 100 may re-activate the PDU session(s). The list of allowed PDU sessions may be provided by the UE 100 when the service request may be a response of a paging or a NAS notification, and may identify the PDU sessions that may be transferred or associated to the access on which the service request may be sent. In an example, for the case of NG-RAN, the AN parameters may include selected PLMN ID, and an establishment cause. The establishment cause may provide the reason for requesting the establishment of an RRC connection. The UE 100 may send NAS service request message towards the AMF 155 encapsulated in an RRC message to the RAN 105.

In an example, if the service request may be triggered for user data, the UE 100 may identify, using the list of PDU sessions to be activated, the PDU session(s) for which the UP connections are to be activated in the NAS service request message. If the service request may be triggered for signaling, the UE 100 may not identify any PDU session(s). If this procedure may be triggered for paging response, and/or the UE 100 may have at the same time user data to be transferred, the UE 100 may identify the PDU session(s) whose UP connections may be activated in MM NAS service request message, by the list of PDU sessions to be activated.

In an example, if the service request over 3GPP access may be triggered in response to a paging indicating non-3GPP access, the NAS service request message may identify in the list of allowed PDU sessions the list of PDU sessions associated with the non-3GPP access that may be re-activated over 3GPP. In an example, the PDU session status may indicate the PDU sessions available in the UE 100. In an example, the UE 100 may not trigger the service request procedure for a PDU session corresponding to a LADN when the UE 100 may be outside the area of availability of the LADN. The UE 100 may not identify such PDU session(s) in the list of PDU sessions to be activated, if the service request may be triggered for other reasons.

In an example, the (R)AN 105 may send to AMF 155 an N2 Message 1010 (e.g., a service request) comprising N2 parameters, MM NAS service request, and/or the like. The AMF 155 may reject the N2 message if it may not be able to handle the service request. In an example, if NG-RAN may be used, the N2 parameters may include the 5G-GUTI, selected PLMN ID, location information, RAT type, establishment cause, and/or the like. In an example, the 5G-GUTI may be obtained in RRC procedure and the (R)AN 105 may select the AMF 155 according to the 5G-GUTI. In an example, the location information and RAT type may relate to the cell in which the UE 100 may be camping. In an example, based on the PDU session status, the AMF 155 may initiate PDU session release procedure in the network for the PDU sessions whose PDU session ID(s) may be indicated by the UE 100 as not available.

In an example, if the service request was not sent integrity protected or integrity protection verification failed, the AMF 155 may initiate a NAS authentication/security procedure 1015.

In an example, if the UE 100 triggers the service request to establish a signaling connection, upon successful establishment of the signaling connection, the UE 100 and the network may exchange NAS signaling.

In an example the AMF 155 may send to the SMF 160 a PDU session update context request 1020 e.g., Nsmf_PDUSession_UpdateSMContext request comprising PDU session ID(s), Cause(s), UE 100 location information, access type, and/or the like.

In an example, the Nsmf_PDUSession_UpdateSMContext request may be invoked by the AMF 155 if the UE 100 may identify PDU session(s) to be activated in the NAS service request message. In an example, the Nsmf_PDUSession_UpdateSMContext request may be triggered by the SMF 160 wherein the PDU session(s) identified by the UE 100 may correlate to other PDU session ID(s) than the one triggering the procedure. In an example, the Nsmf_PDUSession_UpdateSMContext request may be triggered by the SMF 160 wherein the current UE 100 location may be outside the area of validity for the N2 information provided by the SMF 160 during a network triggered service request procedure. The AMF 155 may not send the N2 information provided by the SMF 160 during the network triggered service request procedure.

In an example, the AMF 155 may determine the PDU session(s) to be activated and may send a Nsmf_PDUSession_UpdateSMContext request to SMF 160(s) associated with the PDU session(s) with cause set to indicate establishment of user plane resources for the PDU session(s).

In an example, if the procedure may be triggered in response to paging indicating non-3GPP access, and the list of allowed PDU sessions provided by the UE 100 may not include the PDU session for which the UE 100 was paged, the AMF 155 may notify the SMF 160 that the user plane for the PDU session may not be re-activated. The service request procedure may succeed without re-activating the user plane of any PDU sessions, and the AMF 155 may notify the UE 100.

In an example, if the PDU session ID may correspond to a LADN and the SMF 160 may determine that the UE 100 may be outside the area of availability of the LADN based on the UE 100 location reporting from the AMF 155, the SMF 160 may decide to (based on local policies) keep the PDU session, may reject the activation of user plane connection for the PDU session and may inform the AMF 155. In an example, if the procedure may be triggered by a network triggered service request, the SMF 160 may notify the UPF 110 that originated the data notification to discard downlink data for the PDU sessions and/or to not provide further data notification messages. The SMF 160 may respond to the AMF 155 with an appropriate reject cause and the user plane activation of PDU session may be stopped.

In an example, if the PDU session ID may correspond to a LADN and the SMF 160 may determine that the UE 100 may be outside the area of availability of the LADN based on the UE 100 location reporting from the AMF 155, the SMF 160 may decide to (based on local policies) release the PDU session. The SMF 160 may locally release the PDU session and may inform the AMF 155 that the PDU session may be released. The SMF 160 may respond to the AMF 155 with an appropriate reject cause and the user plane Activation of PDU session may be stopped.

In an example, if the UP activation of the PDU session may be accepted by the SMF 160, based on the location info received from the AMF 155, the SMF 160 may check the UPF 110 Selection 1025 Criteria (e.g., slice isolation requirements, slice coexistence requirements, UPF's 110 dynamic load, UPF's 110 relative static capacity among UPFs supporting the same DNN, UPF 110 location available at the SMF 160, UE 100 location information, Capability of the UPF 110 and the functionality required for the particular UE 100 session. In an example, an appropriate UPF 110 may be selected by matching the functionality and features required for a UE 100, DNN, PDU session type (e.g. IPv4, IPv6, ethernet type or unstructured type) and if applicable, the static IP address/prefix, SSC mode selected for the PDU session, UE 100 subscription profile in UDM 140, DNAI as included in the PCC rules, local operator policies, S-NSSAI, access technology being used by the UE 100, UPF 110 logical topology, and/or the like), and may determine to perform one or more of the following: continue using the current UPF(s); may select a new intermediate UPF 110 (or add/remove an intermediate UPF 110), if the UE 100 has moved out of the service area of the UPF 110 that was previously connecting to the (R)AN 105, while maintaining the UPF(s) acting as PDU session anchor; may trigger re-establishment of the PDU session to perform relocation/reallocation of the UPF 110 acting as PDU session anchor, e.g. the UE 100 has moved out of the service area of the anchor UPF 110 which is connecting to RAN 105.

In an example, the SMF 160 may send to the UPF 110 (e.g., new intermediate UPF 110) an N4 session establishment request 1030. In an example, if the SMF 160 may select a new UPF 110 to act as intermediate UPF 110-2 for the PDU session, or if the SMF 160 may select to insert an intermediate UPF 110 for a PDU session which may not have an intermediate UPF 110-2, an N4 session establishment request 1030 message may be sent to the new UPF 110, providing packet detection, data forwarding, enforcement and reporting rules to be installed on the new intermediate UPF. The PDU session anchor addressing information (on N9) for this PDU session may be provided to the intermediate UPF 110-2.

In an example, if a new UPF 110 is selected by the SMF 160 to replace the old (intermediate) UPF 110-2, the SMF 160 may include a data forwarding indication. The data forwarding indication may indicate to the UPF 110 that a second tunnel endpoint may be reserved for buffered DL data from the old I-UPF.

In an example, the new UPF 110 (intermediate) may send to SMF 160 an N4 session establishment response message 1030. In case the UPF 110 may allocate CN tunnel info, the UPF 110 may provide DL CN tunnel info for the UPF 110 acting as PDU session anchor and UL CN tunnel info (e.g., CN N3 tunnel info) to the SMF 160. If the data forwarding indication may be received, the new (intermediate) UPF 110 acting as N3 terminating point may send DL CN tunnel info for the old (intermediate) UPF 110-2 to the SMF 160. The SMF 160 may start a timer, to release the resource in the old intermediate UPF 110-2.

In an example, if the SMF 160 may selects a new intermediate UPF 110 for the PDU session or may remove the old I-UPF 110-2, the SMF 160 may send N4 session modification request message 1035 to PDU session anchor, PSA UPF 110-3, providing the data forwarding indication and DL tunnel information from new intermediate UPF 110.

In an example, if the new intermediate UPF 110 may be added for the PDU session, the (PSA) UPF 110-3 may begin to send the DL data to the new I-UPF 110 as indicated in the DL tunnel information.

In an example, if the service request may be triggered by the network, and the SMF 160 may remove the old I-UPF 110-2 and may not replace the old I-UPF 110-2 with the new I-UPF 110, the SMF 160 may include the data forwarding indication in the request. The data forwarding indication may indicate to the (PSA) UPF 110-3 that a second tunnel endpoint may be reserved for buffered DL data from the old I-UPF 110-2. In this case, the PSA UPF 110-3 may begin to buffer the DL data it may receive at the same time from the N6 interface.

In an example, the PSA UPF 110-3 (PSA) may send to the SMF 160 an N4 session modification response 1035. In an example, if the data forwarding indication may be received, the PSA UPF 110-3 may become as N3 terminating point and may send CN DL tunnel info for the old (intermediate) UPF 110-2 to the SMF 160. The SMF 160 may start a timer, to release the resource in old intermediate UPF 110-2 if there is one.

In an example, the SMF 160 may send to the old UPF 110-2 an N4 session modification request 1045 (e.g., may comprise new UPF 110 address, new UPF 110 DL tunnel ID, and/or the like). In an example, if the service request may be triggered by the network, and/or the SMF 160 may remove the old (intermediate) UPF 110-2, the SMF 160 may send the N4 session modification request message to the old (intermediate) UPF 110-2, and may provide the DL tunnel information for the buffered DL data. If the SMF 160 may allocate new I-UPF 110, the DL tunnel information is from the new (intermediate) UPF 110 may act as N3 terminating point. If the SMF 160 may not allocate a new I-UPF 110, the DL tunnel information may be from the new UPF 110 (PSA) 110-3 acting as N3 terminating point. The SMF 160 may start a timer to monitor the forwarding tunnel. In an example, the old (intermediate) UPF 110-2 may send N4 session modification response message to the SMF 160.

In an example, if the I-UPF 110-2 may be relocated and forwarding tunnel was established to the new I-UPF 110, the old (intermediate) UPF 110-2 may forward its buffered data to the new (intermediate) UPF 110 acting as N3 terminating point. In an example, if the old I-UPF 110-2 may be removed and the new I-UPF 110 may not be assigned for the PDU session and forwarding tunnel may be established to the UPF 110 (PSA) 110-3, the old (intermediate) UPF 110-2 may forward its buffered data to the UPF 110 (PSA) 110-3 acting as N3 terminating point.

In an example, the SMF 160 may send to the AMF 155 an N11 message 1060 e.g., a Nsmf_PDUSession_UpdateSMContext response (comprising: N1 SM container (PDU session ID, PDU session re-establishment indication), N2 SM information (PDU session ID, QoS profile, CN N3 tunnel info, S-NSSAI), Cause), upon reception of the Nsmf_PDUSession_UpdateSMContext request with a cause including e.g., establishment of user plane resources. The SMF 160 may determine whether UPF 110 reallocation may be performed, based on the UE 100 location information, UPF 110 service area and operator policies. In an example, for a PDU session that the SMF 160 may determine to be served by the current UPF 110, e.g., PDU session anchor or intermediate UPF, the SMF 160 may generate N2 SM information and may send a Nsmf_PDUSession_UpdateSMContext response 1060 to the AMF 155 to establish the user plane(s). The N2 SM information may contain information that the AMF 155 may provide to the RAN 105. In an example, for a PDU session that the SMF 160 may determine as requiring a UPF 110 relocation for PDU session anchor UPF, the SMF 160 may reject the activation of UP of the PDU session by sending Nsmf_PDUSession_UpdateSMContext response that may contain N1 SM container to the UE 100 via the AMF 155. The N1 SM container may include the corresponding PDU session ID and PDU session re-establishment indication.

Upon reception of the Namf_EventExposure_Notify from the AMF 155 to the SMF 160, with an indication that the UE 100 is reachable, if the SMF 160 may have pending DL data, the SMF 160 may invoke the Namf_Communication_N1N2MessageTransfer service operation to the AMF 155 to establish the user plane(s) for the PDU sessions. In an example, the SMF 160 may resume sending DL data notifications to the AMF 155 in case of DL data.

In an example, the SMF 160 may send a message to the AMF 155 to reject the activation of UP of the PDU session by including a cause in the Nsmf_PDUSession_UpdateSMContext response if the PDU session may correspond to a LADN and the UE 100 may be outside the area of availability of the LADN, or if the AMF 155 may notify the SMF 160 that the UE 100 may be reachable for regulatory prioritized service, and the PDU session to be activated may not for a regulatory prioritized service; or if the SMF 160 may decide to perform PSA UPF 110-3 relocation for the requested PDU session.

In an example, the AMF 155 may send to the (R)AN 105 an N2 request message 1065 (e.g., N2 SM information received from SMF 160, security context, AMF 155 signaling connection ID, handover restriction list, MM NAS service accept, list of recommended cells / TAs / NG-RAN node identifiers). In an example, the RAN 105 may store the security context, AMF 155 signaling connection Id, QoS information for the QoS flows of the PDU sessions that may be activated and N3 tunnel IDs in the UE 100 RAN 105 context. In an example, the MM NAS service accept may include PDU session status in the AMF 155. If the activation of UP of a PDU session may be rejected by the SMF 160, the MM NAS service accept may include the PDU session ID and the reason why the user plane resources may not be activated (e.g. LADN not available). Local PDU session release during the session request procedure may be indicated to the UE 100 via the session Status.

In an example, if there are multiple PDU sessions that may involve multiple SMF 160s, the AMF 155 may not wait for responses from all SMF 160s before it may send N2 SM information to the UE 100. The AMF 155 may wait for all responses from the SMF 160s before it may send MM NAS service accept message to the UE 100.

In an example, the AMF 155 may include at least one N2 SM information from the SMF 160 if the procedure may be triggered for PDU session user plane activation. AMF 155 may send additional N2 SM information from SMF 160s in separate N2 message(s) (e.g. N2 tunnel setup request), if there is any. Alternatively, if multiple SMF 160s may be involved, the AMF 155 may send one N2 request message to (R)AN 105 after all the Nsmf_PDUSession_UpdateSMContext response service operations from all the SMF 160s associated with the UE 100 may be received. In such case, the N2 request message may include the N2 SM information received in each of the Nsmf_PDUSession_UpdateSMContext response and PDU session ID to enable AMF 155 to associate responses to relevant SMF 160.

In an example, if the RAN 105 (e.g., NG RAN) node may provide the list of recommended cells / TAs / NG-RAN node identifiers during the AN release procedure, the AMF 155 may include the information from the list in the N2 request. The RAN 105 may use this information to allocate the RAN 105 notification area when the RAN 105 may decide to enable RRC inactive state for the UE 100.

If the AMF 155 may receive an indication, from the SMF 160 during a PDU session establishment procedure that the UE 100 may be using a PDU session related to latency sensitive services, for any of the PDU sessions established for the UE 100 and the AMF 155 has received an indication from the UE 100 that may support the CM-CONNECTED with RRC inactive state, then the AMF 155 may include the UE's RRC inactive assistance information. In an example, the AMF 155 based on network configuration, may include the UE's RRC inactive assistance information.

In an example, the (R)AN 105 may send to the UE 100 a message to perform RRC connection reconfiguration 1070 with the UE 100 depending on the QoS information for all the QoS flows of the PDU sessions whose UP connections may be activated and data radio bearers. In an example, the user plane security may be established.

In an example, if the N2 request may include a MM NAS service accept message, the RAN 105 may forward the MM NAS service accept to the UE 100. The UE 100 may locally delete context of PDU sessions that may not be available in 5GC.

In an example, if the N1 SM information may be transmitted to the UE 100 and may indicate that some PDU session(s) may be re-established, the UE 100 may initiate PDU session re-establishment for the PDU session(s) that may be re-established after the service request procedure may be complete.

In an example, after the user plane radio resources may be setup, the uplink data from the UE 100 may be forwarded to the RAN 105. The RAN 105 (e.g., NG-RAN) may send the uplink data to the UPF 110 address and tunnel ID provided.

In an example, the (R)AN 105 may send to the AMF 155 an N2 request Ack 1105 (e.g., N2 SM information (comprising: AN tunnel info, list of accepted QoS flows for the PDU sessions whose UP connections are activated, list of rejected QoS flows for the PDU sessions whose UP connections are activated)). In an example, the N2 request message may include N2 SM information(s), e.g. AN tunnel info. RAN 105 may respond N2 SM information with separate N2 message (e.g. N2 tunnel setup response). In an example, if multiple N2 SM information are included in the N2 request message, the N2 request Ack may include multiple N2 SM information and information to enable the AMF 155 to associate the responses to relevant SMF 160.

In an example, the AMF 155 may send to the SMF 160 a Nsmf_PDUSession_UpdateSMContext request 1110 (N2 SM information (AN tunnel info), RAT type) per PDU session. If the AMF 155 may receive N2 SM information (one or multiple) from the RAN 105, then the AMF 155 may forward the N2 SM information to the relevant SMF 160. If the UE 100 time zone may change compared to the last reported UE 100 Time Zone then the AMF 155 may include the UE 100 time zone IE in the Nsmf_PDUSession_UpdateSMContext request message.

In an example, if dynamic PCC is deployed, the SMF 160 may initiate notification about new location information to the PCF 135 (if subscribed) by invoking an event exposure notification operation (e.g., a Nsmf_EventExposure_Notify service operation). The PCF 135 may provide updated policies by invoking a policy control update notification message 1115 (e.g., a Npcf_SMPolicyControl_UpdateNotify operation).

In an example, if the SMF 160 may select a new UPF 110 to act as intermediate UPF 110 for the PDU session, the SMF 160 may initiates an N4 session modification procedure 1120 to the new I-UPF 110 and may provide AN tunnel info. The downlink data from the new I-UPF 110 may be forwarded to RAN 105 and UE 100. In an example, the UPF 110 may send to the SMF 160, an N4 session modification response 1120. In an example, the SMF 160 may send to the AMF 155, a Nsmf_PDUSession_UpdateSMContext response 1140.

In an example, if forwarding tunnel may be established to the new I-UPF 110 and if the timer SMF 160 set for forwarding tunnel may be expired, the SMF 160 may sends N4 session modification request 1145 to new (intermediate) UPF 110 acting as N3 terminating point to release the forwarding tunnel. In an example, the new (intermediate) UPF 110 may send to the SMF 160 an N4 session modification response 1145. In an example, the SMF 160 may send to the PSA UPF 110-3 an N4 session modification request 1150, or N4 session release request. In an example, if the SMF 160 may continue using the old UPF 110-2, the SMF 160 may send an N4 session modification request 1155, providing AN tunnel info. In an example, if the SMF 160 may select a new UPF 110 to act as intermediate UPF 110, and the old UPF 110-2 may not be PSA UPF 110-3, the SMF 160 may initiate resource release, after timer expires, by sending an N4 session release request (release cause) to the old intermediate UPF 110-2.

In an example, the old intermediate UPF 110-2 may send to the SMF 160 an N4 session modification response or N4 session release response 1155. The old UPF 110-2 may acknowledge with the N4 session modification response or N4 session release response message to confirm the modification or release of resources. The AMF 155 may invoke the Namf_EventExposure_Notify service operation to notify the mobility related events, after this procedure may complete, towards the NFs that may have subscribed for the events. In an example, the AMF 155 may invoke the Namf_EventExposure_Notify towards the SMF 160 if the SMF 160 had subscribed for UE 100 moving into or out of area of interest and if the UE's current location may indicate that it may be moving into or moving outside of the area of interest subscribed, or if the SMF 160 had subscribed for LADN DNN and if the UE 100 may be moving into or outside of an area where the LADN is available, or if the UE 100 may be in MICO mode and the AMF 155 had notified an SMF 160 of the UE 100 being unreachable and that SMF 160 may not send DL data notifications to the AMF 155, and the AMF 155 may informs the SMF 160 that the UE 100 is reachable, or if the SMF 160 had subscribed for UE 100 reachability status, then the AMF 155 may notify the UE 100 reachability.

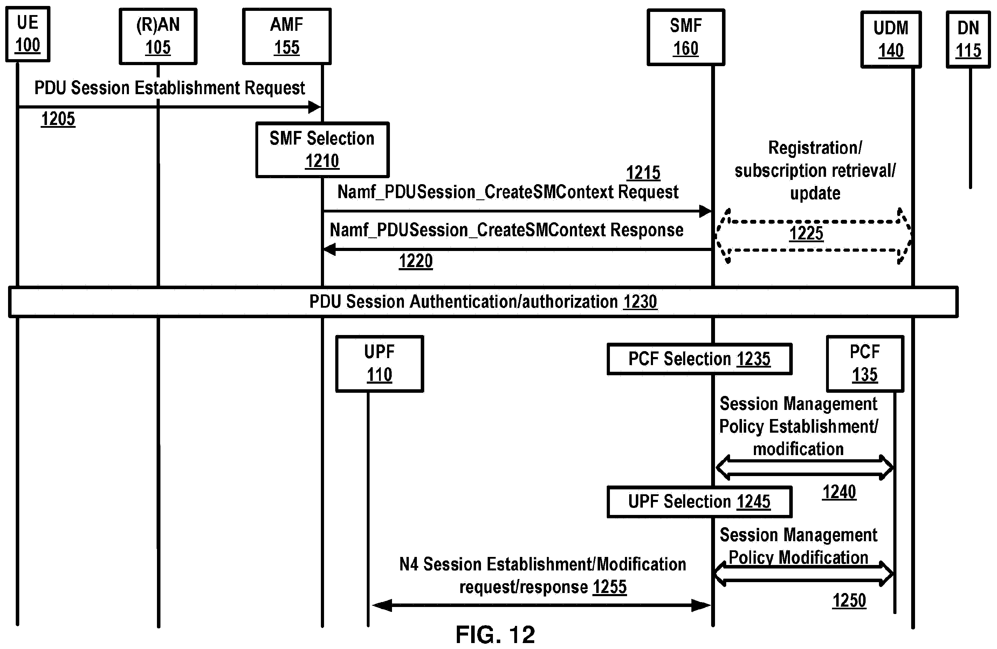

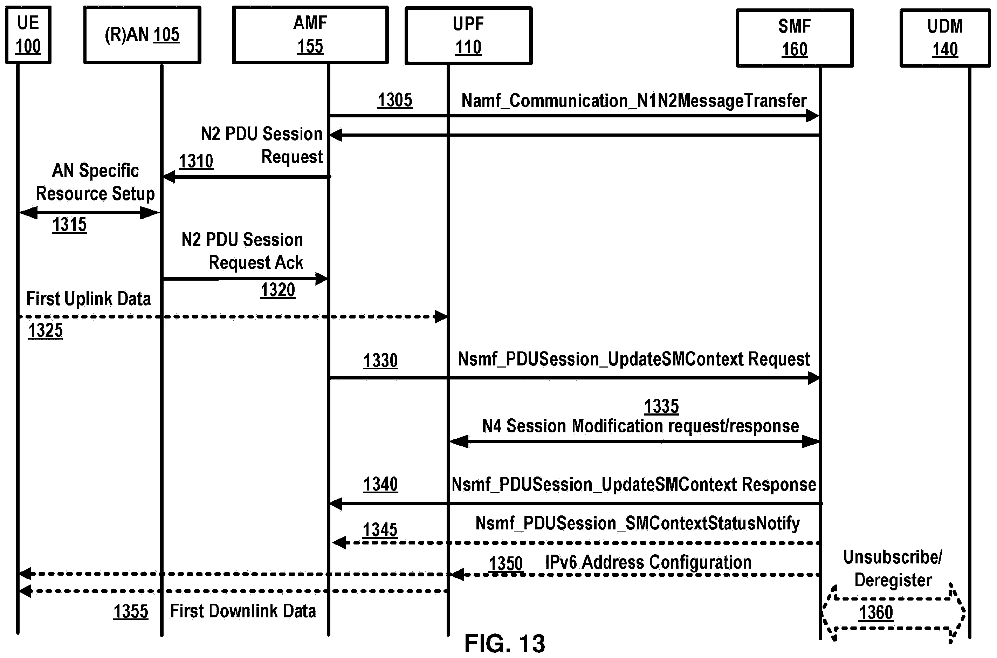

An example PDU session establishment procedure depicted in FIG. 12 and FIG. 13. In an example embodiment, when the PDU session establishment procedure may be employed, the UE 100 may send to the AMF 155 a NAS Message 1205 (or a SM NAS message) comprising NSSAI, S-NSSAI (e.g., requested S-NSSAI, allowed S-NSSAI, subscribed S-NSSAI, and/or the like), DNN, PDU session ID, request type, old PDU session ID, N1 SM container (PDU session establishment request), and/or the like. In an example, the UE 100, in order to establish a new PDU session, may generate a new PDU session ID. In an example, when emergency service may be required and an emergency PDU session may not already be established, the UE 100 may initiate the UE 100 requested PDU session establishment procedure with a request type indicating emergency request. In an example, the UE 100 may initiate the UE 100 requested PDU session establishment procedure by the transmission of the NAS message containing a PDU session establishment request within the N1 SM container. The PDU session establishment request may include a PDU type, SSC mode, protocol configuration options, and/or the like. In an example, the request type may indicate initial request if the PDU session establishment is a request to establish the new PDU session and may indicate existing PDU session if the request refers to an existing PDU session between 3GPP access and non-3GPP access or to an existing PDN connection in EPC. In an example, the request type may indicate emergency request if the PDU session establishment may be a request to establish a PDU session for emergency services. The request type may indicate existing emergency PDU session if the request refers to an existing PDU session for emergency services between 3GPP access and non-3GPP access. In an example, the NAS message sent by the UE 100 may be encapsulated by the AN in a N2 message towards the AMF 155 that may include user location information and access technology type information. In an example, the PDU session establishment request message may contain SM PDU DN request container containing information for the PDU session authorization by the external DN. In an example, if the procedure may be triggered for SSC mode 3 operation, the UE 100 may include the old PDU session ID which may indicate the PDU session ID of the ongoing PDU session to be released, in the NAS message. The old PDU session ID may be an optional parameter which may be included in this case. In an example, the AMF 155 may receive from the AN the NAS message (e.g., NAS SM message) together with user location information (e.g. cell ID in case of the RAN 105). In an example, the UE 100 may not trigger a PDU session establishment for a PDU session corresponding to a LADN when the UE 100 is outside the area of availability of the LADN.

In an example, the AMF 155 may determine that the NAS message or the SM NAS message may correspond to the request for the new PDU session based on that request type indicates initial request and that the PDU session ID may not be used for any existing PDU session(s) of the UE 100. If the NAS message does not contain an S-NSSAI, the AMF 155 may determine a default S-NSSAI for the requested PDU session either according to the UE 100 subscription, if it may contain only one default S-NSSAI, or based on operator policy. In an example, the AMF 155 may perform SMF 160 selection 1210 and select an SMF 160. If the request type may indicate initial request or the request may be due to handover from EPS, the AMF 155 may store an association of the S-NSSAI, the PDU session ID and a SMF 160 ID. In an example, if the request type is initial request and if the old PDU session ID indicating the existing PDU session may be contained in the message, the AMF 155 may select the SMF 160 and may store an association of the new PDU session ID and the selected SMF 160 ID.

In an example, the AMF 155 may send to the SMF 160, an N11 message 1215, e.g., Nsmf_PDUSession_CreateSMContext request (comprising: SUPI or PEI, DNN, S-NSSAI, PDU session ID, AMF 155 ID, request type, N1 SM container (PDU session establishment request), user location information, access type, PEI, GPSI), or Nsmf_PDUSession_UpdateSMContext request (SUPI, DNN, S-NSSAI, PDU session ID, AMF 155 ID, request type, N1 SM container (PDU session establishment request), user location information, access type, RAT type, PEI). In an example, if the AMF 155 may not have an association with the SMF 160 for the PDU session ID provided by the UE 100 (e.g. when request type indicates initial request), the AMF 155 may invoke the Nsmf_PDUSession_CreateSMContext request, but if the AMF 155 already has an association with an SMF 160 for the PDU session ID provided by the UE 100 (e.g. when request type indicates existing PDU session), the AMF 155 may invoke the Nsmf_PDUSession_UpdateSMContext request. In an example, the AMF 155 ID may be the UE's GUAMI which uniquely identifies the AMF 155 serving the UE 100. The AMF 155 may forward the PDU session ID together with the N1 SM container containing the PDU session establishment request received from the UE 100. The AMF 155 may provide the PEI instead of the SUPI when the UE 100 has registered for emergency services without providing the SUPI. In case the UE 100 has registered for emergency services but has not been authenticated, the AMF 155 may indicate that the SUPI has not been authenticated.

In an example, if the request type may indicate neither emergency request nor existing emergency PDU session and, if the SMF 160 has not yet registered and subscription data may not be available, the SMF 160 may register with the UDM 140, and may retrieve subscription data 1225 and subscribes to be notified when subscription data may be modified. In an example, if the request type may indicate existing PDU session or existing emergency PDU session, the SMF 160 may determine that the request may be due to handover between 3GPP access and non-3GPP access or due to handover from EPS. The SMF 160 may identify the existing PDU session based on the PDU session ID. The SMF 160 may not create a new SM context but instead may update the existing SM context and may provide the representation of the updated SM context to the AMF 155 in the response. if the request type may be initial request and if the old PDU session ID may be included in Nsmf_PDUSession_CreateSMContext request, the SMF 160 may identify the existing PDU session to be released based on the old PDU session ID.

In an example, the SMF 160 may send to the AMF 155, the N11 message response 1220, e.g., either a PDU session create/update response, Nsmf_PDUSession_CreateSMContext response 1220 (cause, SM context ID or N1 SM container (PDU session reject(cause))) or a Nsmf_PDUSession_UpdateSMContext response.

In an example, if the SMF 160 may perform secondary authorization/authentication 1230 during the establishment of the PDU session by a DN-AAA server, the SMF 160 may select a UPF 110 and may trigger a PDU session establishment authentication/authorization.

In an example, if the request type may indicate initial request, the SMF 160 may select an SSC mode for the PDU session. The SMF 160 may select one or more UPFs as needed. In case of PDU type IPv4 or IPv6, the SMF 160 may allocate an IP address/prefix for the PDU session. In case of PDU type IPv6, the SMF 160 may allocate an interface identifier to the UE 100 for the UE 100 to build its link-local address. For Unstructured PDU type the SMF 160 may allocate an IPv6 prefix for the PDU session and N6 point-to-point tunneling (based on UDP/IPv6).

In an example, if dynamic PCC is deployed, the may SMF 160 performs PCF 135 selection 1235. If the request type indicates existing PDU session or existing emergency PDU session, the SMF 160 may use the PCF 135 already selected for the PDU session. If dynamic PCC is not deployed, the SMF 160 may apply local policy.

In an example, the SMF 160 may perform a session management policy establishment procedure 1240 to establish a PDU session with the PCF 135 and may get the default PCC Rules for the PDU session. The GPSI may be included if available at the SMF 160. If the request type in 1215 indicates existing PDU session, the SMF 160 may notify an event previously subscribed by the PCF 135 by a session management policy modification procedure and the PCF 135 may update policy information in the SMF 160. The PCF 135 may provide authorized session-AMBR and the authorized 5QI and ARP to SMF 160. The PCF 135 may subscribe to the IP allocation/release event in the SMF 160 (and may subscribe other events).

In an example, the PCF 135, based on the emergency DNN, may set the ARP of the PCC rules to a value that may be reserved for emergency services.

In an example, if the request type in 1215 indicates initial request, the SMF 160 may select an SSC mode for the PDU session. The SMF 160 may select 1245 one or more UPFs as needed. In case of PDU type IPv4 or IPv6, the SMF 160 may allocate an IP address/prefix for the PDU session. In case of PDU type IPv6, the SMF 160 may allocate an interface identifier to the UE 100 for the UE 100 to build its link-local address. For unstructured PDU type the SMF 160 may allocate an IPv6 prefix for the PDU session and N6 point-to-point tunneling (e.g., based on UDP/IPv6). In an example, for Ethernet PDU type PDU session, neither a MAC nor an IP address may be allocated by the SMF 160 to the UE 100 for this PDU session.

In an example, if the request type in 1215 is existing PDU session, the SMF 160 may maintain the same IP address/prefix that may be allocated to the UE 100 in the source network.

In an example, if the request type in 1215 indicates existing PDU session referring to an existing PDU session moved between 3GPP access and non-3GPP access, the SMF 160 may maintain the SSC mode of the PDU session, e.g., the current PDU session Anchor and IP address. In an example, the SMF 160 may trigger e.g. new intermediate UPF 110 insertion or allocation of a new UPF 110. In an example, if the request type indicates emergency request, the SMF 160 may select 1245 the UPF 110 and may select SSC mode 1.

In an example, the SMF 160 may perform a session management policy modification 1250 procedure to report some event to the PCF 135 that has previously subscribed. If request type is initial request and dynamic PCC is deployed and PDU type is IPv4 or IPv6, the SMF 160 may notify the PCF 135 (that has previously subscribed) with the allocated UE 100 IP address/prefix.

In an example, the PCF 135 may provide updated policies to the SMF 160. The PCF 135 may provide authorized session-AMBR and the authorized 5QI and ARP to the SMF 160.

In an example, if request type indicates initial request, the SMF 160 may initiate an N4 session establishment procedure 1255 with the selected UPF 110. The SMF 160 may initiate an N4 session modification procedure with the selected UPF 110. In an example, the SMF 160 may send an N4 session establishment/modification request 1255 to the UPF 110 and may provide packet detection, enforcement, reporting rules, and/or the like to be installed on the UPF 110 for this PDU session. If CN tunnel info is allocated by the SMF 160, the CN tunnel info may be provided to the UPF 110. If the selective user plane deactivation is required for this PDU session, the SMF 160 may determine the Inactivity Timer and may provide it to the UPF 110. In an example, the UPF 110 may acknowledges by sending an N4 session establishment/modification response 1255. If CN tunnel info is allocated by the UPF, the CN tunnel info may be provided to SMF 160. In an example, if multiple UPFs are selected for the PDU session, the SMF 160 may initiate N4 session establishment/modification procedure 1255 with each UPF 110 of the PDU session.

In an example, the SMF 160 may send to the AMF 155 an Namf_Communication_N1N2MessageTransfer 1305 message (comprising PDU session ID, access type, N2 SM information (PDU session ID, QFI(s), QoS profile(s), CN tunnel info, S-NSSAI, session-AMBR, PDU session type, and/or the like), N1 SM container (PDU session establishment accept (QoS Rule(s), selected SSC mode, S-NSSAI, allocated IPv4 address, interface identifier, session-AMBR, selected PDU session type, and/or the like))). In case of multiple UPFs are used for the PDU session, the CN tunnel info may comprise tunnel information related with the UPF 110 that terminates N3. In an example, the N2 SM information may carry information that the AMF 155 may forward to the (R)AN 105 (e.g., the CN tunnel info corresponding to the core network address of the N3 tunnel corresponding to the PDU session, one or multiple QoS profiles and the corresponding QFIs may be provided to the (R)AN 105, the PDU session ID may be used by AN signaling with the UE 100 to indicate to the UE 100 the association between AN resources and a PDU session for the UE100, and/or the like). In an example, a PDU session may be associated to an S-NSSAI and a DNN. In an example, the N1 SM container may contain the PDU session establishment accept that the AMF 155 may provide to the UE 100. In an example, multiple QoS rules and QoS profiles may be included in the PDU session establishment accept within the N1 SM and in the N2 SM information. In an example, the Namf_Communication_N1N2MessageTransfer 1305 may further comprise the PDU session ID and information allowing the AMF 155 to know which access towards the UE 100 to use.

In an example, the AMF 155 may send to the (R)AN105 an N2 PDU session request 1310 (comprising N2 SM information, NAS message (PDU session ID, N1 SM container (PDU session establishment accept, and/or the like))). In an example, the AMF 155 may send the NAS message 1310 that may comprise PDU session ID and PDU session establishment accept targeted to the UE 100 and the N2 SM information received from the SMF 160 within the N2 PDU session request 1310 to the (R)AN 105.

In an example, the (R)AN 105 may issue AN specific signaling exchange 1315 with the UE 100 that may be related with the information received from SMF 160. In an example, in case of a 3GPP RAN 105, an RRC connection reconfiguration procedure may take place with the UE 100 to establish the necessary RAN 105 resources related to the QoS Rules for the PDU session request 1310. In an example, (R)AN 105 may allocate (R)AN 105 N3 tunnel information for the PDU session. In case of dual connectivity, the master RAN 105 node may assign some (zero or more) QFIs to be setup to a master RAN 105 node and others to the secondary RAN 105 node. The AN tunnel info may comprise a tunnel endpoint for each involved RAN 105 node, and the QFIs assigned to each tunnel endpoint. A QFI may be assigned to either the master RAN 105 node or the secondary RAN 105 node. In an example, (R)AN 105 may forward the NAS message 1310 (PDU session ID, N1 SM container (PDU session establishment accept)) to the UE 100. The (R)AN 105 may provide the NAS message to the UE 100 if the necessary RAN 105 resources are established and the allocation of (R)AN 105 tunnel information are successful.

In an example, the N2 PDU session response 1320 may comprise a PDU session ID, cause, N2 SM information (PDU session ID, AN tunnel info, list of accepted/rejected QFI(s)), and/or the like. In an example, the AN tunnel info may correspond to the access network address of the N3 tunnel corresponding to the PDU session.

In an example, the AMF 155 may forward the N2 SM information received from (R)AN 105 to the SMF 160 via a Nsmf_PDUSession_UpdateSM Context request 1330 ( comprising: N2 SM information, request type, and/or the like). In an example, if the list of rejected QFI(s) is included in N2 SM information, the SMF 160 may release the rejected QFI(s) associated QoS profiles.

In an example, the SMF 160 may initiate an N4 session modification procedure 1335 with the UPF110. The SMF 160 may provide AN tunnel info to the UPF 110 as well as the corresponding forwarding rules. In an example, the UPF 110 may provide an N4 session modification response 1335 to the SMF 160160.

In an example, the SMF 160 may send to the AMF 155 an Nsmf_PDUSession_UpdateSMContext response 1340 (Cause). In an example, the SMF 160 may subscribe to the UE 100 mobility event notification from the AMF 155 (e.g. location reporting, UE 100 moving into or out of area of interest), after this step by invoking Namf_EventExposure_Subscribe service operation. For LADN, the SMF 160 may subscribe to the UE 100 moving into or out of LADN service area event notification by providing the LADN DNN as an indicator for the area of interest. The AMF 155 may forward relevant events subscribed by the SMF 160.

In an example, the SMF 160 may send to the AMF 155, a Nsmf_PDUSession_SMContextStatusNotify (release) 1345. In an example, if during the procedure, any time the PDU session establishment is not successful, the SMF 160 may inform the AMF 155 by invoking Nsmf_PDUSession_SMContextStatusNotify(release) 1345. The SMF 160 may releases any N4 session(s) created, any PDU session address if allocated (e.g. IP address) and may release the association with the PCF 135.

In an example, in case of PDU type IPv6, the SMF 160 may generate an IPv6 Router Advertisement 1350 and may send it to the UE 100 via N4 and the UPF 110.

In an example, if the PDU session may not be established, the SMF 160 may unsubscribe 1360 to the modifications of session management subscription data for the corresponding (SUPI, DNN, S-NSSAI), using Nudm_SDM_Unsubscribe (SUPI, DNN, S-NSSAI), if the SMF 160 is no more handling a PDU session of the UE 100 for this (DNN, S-NSSAI). In an example, if the PDU session may not be established, the SMF 160 may deregister 1360 for the given PDU session using Nudm_UECM_Deregistration (SUPI, DNN, PDU session ID).

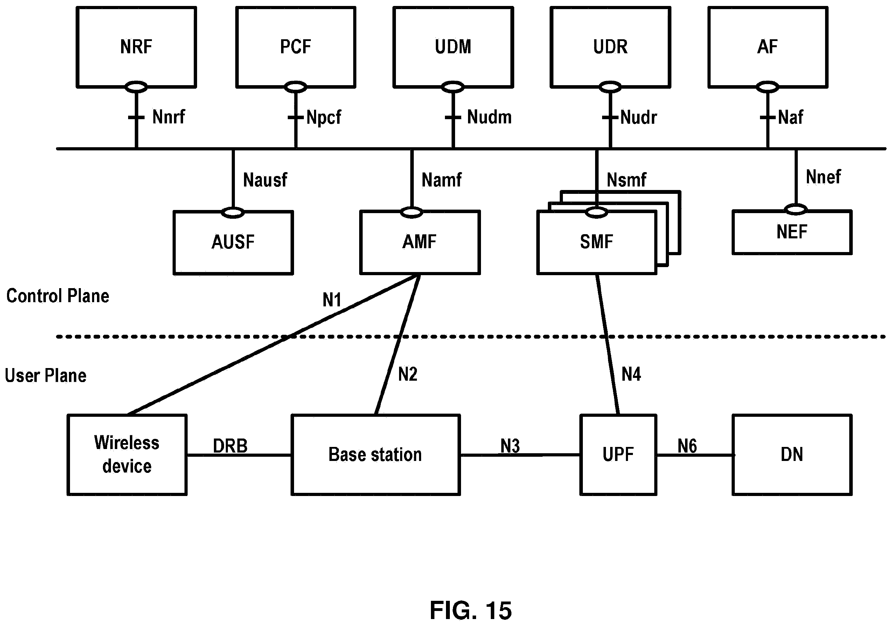

FIG. 15 illustrates a service-based architecture for a 5G network regarding a control plane (CP) and a user plane (UP) interaction. This illustration may depict logical connections between nodes and functions, and its illustrated connections may not be interpreted as direct physical connections. A wireless device may form a radio access network connection with a bases station, which is connected to a User Plane (UP) Function (UPF) over a network interface providing a defined interface such as an N3 interface. The UPF may provide a logical connection to a data network (DN) over a network interface such as an N6 interface. The radio access network connection between the wireless device and the base station may be referred to as a data radio bearer (DRB).

The DN may be a data network used to provide an operator service, 3'rd party service such as the Internet, IP multimedia subsystem (IMS), augmented reality (AR), virtual reality (VR). In some embodiments DN may represent an edge computing network or resource, such as a mobile edge computing (MEC) network.

The wireless device also connects to the AMF through a logical N1 connection. The AMF may be responsible for authentication and authorization of access requests, as well as mobility management functions. The AMF may perform other roles and functions. In a service-based view, AMF may communicate with other core network control plane functions through a service-based interface denoted as Namf.

The SMF is a network function that may be responsible for the allocation and management of IP addresses that are assigned to a wireless device as well as the selection of a UPF for traffic associated with a particular session of the wireless device. There will be typically multiple SMFs in the network, each of which may be associated with a respective group of wireless devices, base stations or UPFs. The SMF may communicate with other core network functions, in a service based view, through a service based interface denoted as Nsmf. The SMF may also connect to a UPF through a logical interface such as network interface N4.

The authentication server function (AUSF) may provide authentication services to other network functions over a service based Nausf interface. A network exposure function (NEF) can be deployed in the network to allow servers, functions and other entities such as those outside a trusted domain (operator network) to have exposure to services and capabilities within the network. In one such example, the NEF may act like a proxy between an external application server (AS) outside the illustrated network and network functions such as the PCF, the SMF, the UDM and the AMF. The external AS may provide information that may be of use in the setup of the parameters associated with a data session. The NEF may communicate with other network functions through a service based Nnef network interface. The NEF may have an interface to non-3GPP functions.

The Network Repository Function (NRF) may provide network service discovery functionality. The NRF may be specific to the Public Land Mobility Network (PLMN) or network operator, with which it is associated. The service discovery functionality can allow network functions and wireless devices connected to the network to determine where and how to access existing network functions.

The PCF may communicate with other network functions over a service based Npcf interface, and may be used to provide policy and rules to other network functions, including those within the control plane. Enforcement and application of the policies and rules may not be responsibility of the PCF. The responsibility of the functions to which the PCF transmits the policy may be responsibility of the AMF or the SMF. In one such example, the PCF may transmit policy associated with session management to the SMF. This may be used to allow for a unified policy framework with which network behavior can be governed.

The UDM may present a service based Nudm interface to communicate with other network functions. The UDM may provide data storage facilities to other network functions. Unified data storage may allow for a consolidated view of network information that may be used to ensure that the most relevant information can be made available to different network functions from a single resource. This may allow implementation of other network functions easier, as they may not need to determine where a particular type of data is stored in the network. The UDM may employ an interface, such as Nudr to connect to the UDR. The PCF may be associated with the UDM.

The PCF may have a direct interface to the UDR or may use Nudr interface to connection with UDR. The UDM may receive requests to retrieve content stored in the UDR, or requests to store content in the UDR. The UDM may be responsible for functionality such as the processing of credentials, location management and subscription management. The UDR may also support authentication credential processing, user identification handling, access authorization, registration/mobility management, subscription management, and short message service (SMS) management. The UDR may be responsible for storing data provided by the UDM. The stored data is associated with policy profile information (which may be provided by PCF) that governs the access rights to the stored data. In some embodiments, the UDR may store policy data, as well as user subscription data which may include any or all of subscription identifiers, security credentials, access and mobility related subscription data and session related data.

The Application Function (AF) may represent the non-data plane (also referred to as the non-user plane) functionality of an application deployed within a network operator domain and within a 3GPP compliant network. The AF may in internal application server (AS). The AF may interact with other core network functions through a service based Naf interface, and may access network capability exposure information, as well as provide application information for use in decisions such as traffic routing. The AF can also interact with functions such as the PCF to provide application specific input into policy and policy enforcement decisions. In many situations, the AF may not provide network services to other network functions. The AF may be often viewed as a consumer or user of services provided by other network functions. An application (application server) outside of the trusted domain (operator network), may perform many of the same functions as AF through the use of NEF.

The wireless device may communicate with network functions that are in the core network control plane (CN-UP), and the core network user plane (CN-CP). The UPF and the data network (DN) is a part of the CN-UP. The DN may be out of core network domain (cellular network domain). In the illustration (FIG. 15), base station locates in CP-UP side. The base station may provide connectivity both for the CN-CP & CN-UP. AMF, SMF, AUSF, NEF, NRF, PCF, and UDM may be functions that reside within the CN-CP 328, and are often referred to as control plane functions. If the AF resides in the trusted domain, the AF may communicate with other functions within CN-CP directly via the service based Naf interface. If the AF resides outside of the trusted domain, the AM may communicate with other functions within CN-CP indirectly via the NEF.

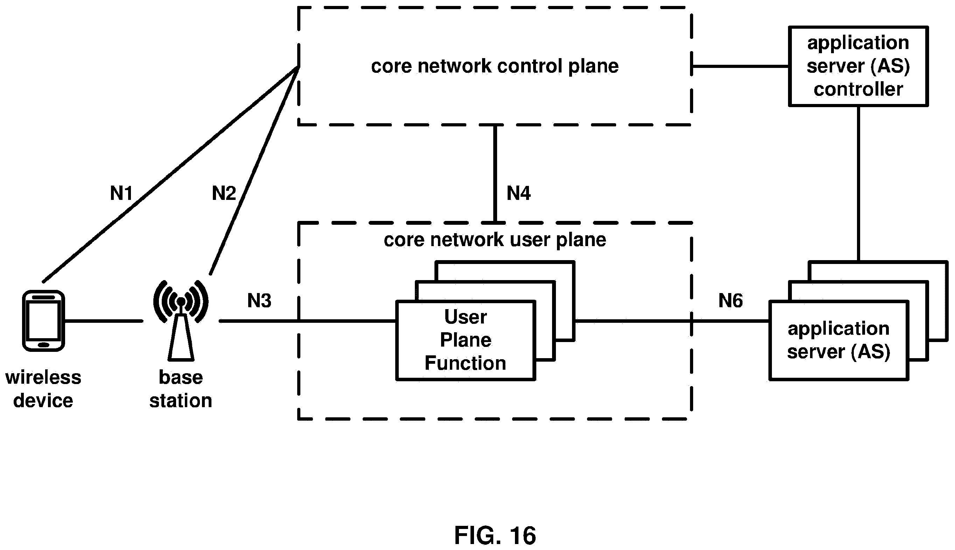

FIGS. 16-20 relate to edge computing. Edge computing (also referred to as mobile edge computing, or MEC) is an evolution of cloud computing that brings hosting of applications from a centralized data center to a network edge. The network edge may be closer to end users and closer to the data generated by the end user's applications. Edge computing may be acknowledged as one of the key pillars for meeting the demanding key performance indicators of 5G, in particular, low latency and bandwidth efficiency. 5G networks may be a key future target environment for MEC deployments. Applications that use high data volumes and/or require short response times (e.g., virtual reality (VR) gaming, real-time facial recognition, video surveillance, etc.) may be particularly suitable for edge computing.

As will be discussed in greater detail below, 5G systems may support edge computing by allowing a MEC system and a 5G system to collaboratively interact for purposes of traffic routing and policy control. In an example, an application may operate as a MEC system having a MEC controller and a plurality of application servers. The MEC controller may be an application function (AF) that interacts with network functions of the 5G system (e.g., a network exposure function (NEF), a policy charging function (PCF), a session management function (SMF), etc.) to influence steering of traffic between the application and a wireless device. The wireless device may obtain MEC services associated with the application by connecting via the 5G system to the MEC system. The 5G system and the MEC system may collaborate to facilitate connection of the wireless device to one or more suitable application servers. One or more of the application servers may be a central application server that is, for example, located at a data center and accessible via the internet. One or more of the applications servers may be an edge application server located at, for example, an edge of the network. The edge application server may be nearer to the wireless device. The location of the edge application server (relative to the location of the central application server) may make the edge application server more suitable for certain tasks. For example, in some scenarios, the wireless device may be able to offload computational tasks to the edge application server, whereas the central application server is too remote for computational offloading.

FIG. 16 illustrates an embodiment of a system that includes an application server controller. A wireless device is connected to a core network via a base station. The wireless device may connect to the core network control plane (CN-CP) via interface N1 and/or interface N2. The wireless device may connect to the core network user plane (CN-UP) via interface N3.

The CN-UP may comprise one or more User Plane Functions (UPFs). One or more of the one or more UPFs may be used to connect the wireless device to an application server (AS) network. The AS network may comprise a plurality of application servers. The plurality of application servers may have different locations, for example, a geographical distribution. For example, there may be a central application server located within the AS network and/or one or more applications servers at different edges of the AS network. The network of ASs may be controlled by an AS controller. The AS controller may be implemented as an application function (AF) that is connected to the core network (for example, the CN CP). The AS controller may also be referred to as a MEC controller and/or an AF controller. The AS controller may be responsible for managing ASs and for locating, relocating, selecting, or reselecting an AS within the AS network. Part of the management performed by the AS controller may be to influence traffic steering within the core network.

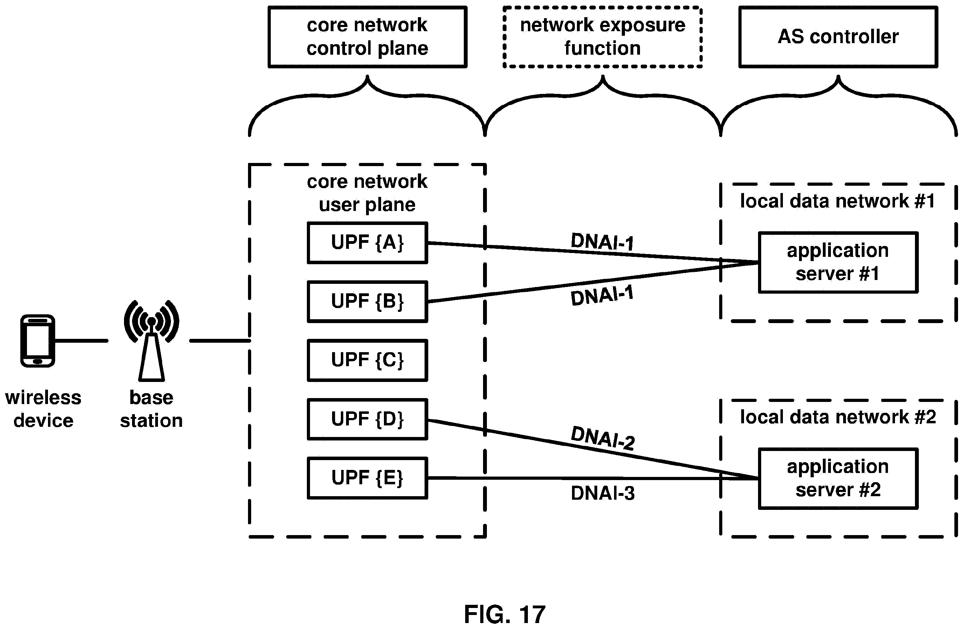

FIG. 17 illustrates segmented management between a cellular network domain and a mobile edge computing (MEC) domain. A core network control plane (CN-CP) and a core network user plane (CN-UP) may belong to the cellular network domain. The CN-UP may comprise a plurality of UPFs, for example, UPF {A}, UPF {B}, UPF {C}, UPF {D}, and UPF {E}. The CN-CP may manage the CN-UP. The AS controller and one or more data networks (DNs) may belong to the MEC domain. The DNs may be referred to as data centers. As illustrated in the figure, the AS controller may manage multiple application servers, for example, an application server #1 and an application server #2. The application servers may be hosted on different DNs, for example, a local DN #1 and a local DN #2. Optionally, an NEF may manage the linkages between the cellular network domain and the MEC domain. Although it is illustrated separately, the NEF may belong to the CN-CP.

In an example, a location of an application server may be indicated by a DN access identifier (DNAI). The DNAI may be interpreted as an index that points to one specific access into one or more DNs. The DNAI values may be defined by an operator based on deployment and/or configuration characteristics of the core network. The DNAIs (for example, DNAI-1, DNAI-2, DNAI-3) may be used by the AS controller to interact with the CN-CP. In the figure, DNAI-1 may indicate one or more areas of the CN-UP which correspond to application server #1. An area of the CN-UP which corresponds to application server #1 may include the UPF {A} and the UPF {B}. In the figure, DNAI-2 may indicate one or more areas of the CN-UP which correspond to application server #2. An area of the CN-UP which corresponds to application server #2 may include the UPF {D}. DNAI3 may also indicate an area of the CN-UP which corresponds to application server #2, and which includes the UPF {E}. The UPF {C} may not correspond to a particular application server.

In an example, an operator may internally define an area associated with a particular DNAI. The operator may define the areas arbitrarily. As an example, all UPFs that are linked to a particular application server may share a DNAI (similar to DNAI-1 in the figure). As an example, DNAI correspond to a group of UPFs, and multiple DNAI may correspond to a particular application server (similar to DNAI-2 and DNAI-3 in the figure).

In an example, if a wireless device is in a first area, the CN-CP may determine to route application-related traffic of the wireless device to the local DN #1 via the UPF {B}. This may be based on a determination that routing via the UPF {B }is more efficient than other possible routes. If the wireless device moves to a second area, the AS controller and/or core network may determine to re-route the application-related traffic of the wireless device to the local DN #1 via the UPF{D}. The DNAIs may enable the cellular network domain and/or the MEC domain to map a particular application server to a particular area, or vice-versa. As an example, the DNAIs may enable the cellular network domain to manage traffic between a wireless device and one or more application servers. As an example, the DNAIs may be known to the AS controller and may be used to facilitate AS management by the AS controller. Using the DNAIs, the AS controller may be enabled to communicate with the CN-CP in order to influence, for example, routing of application-related traffic.

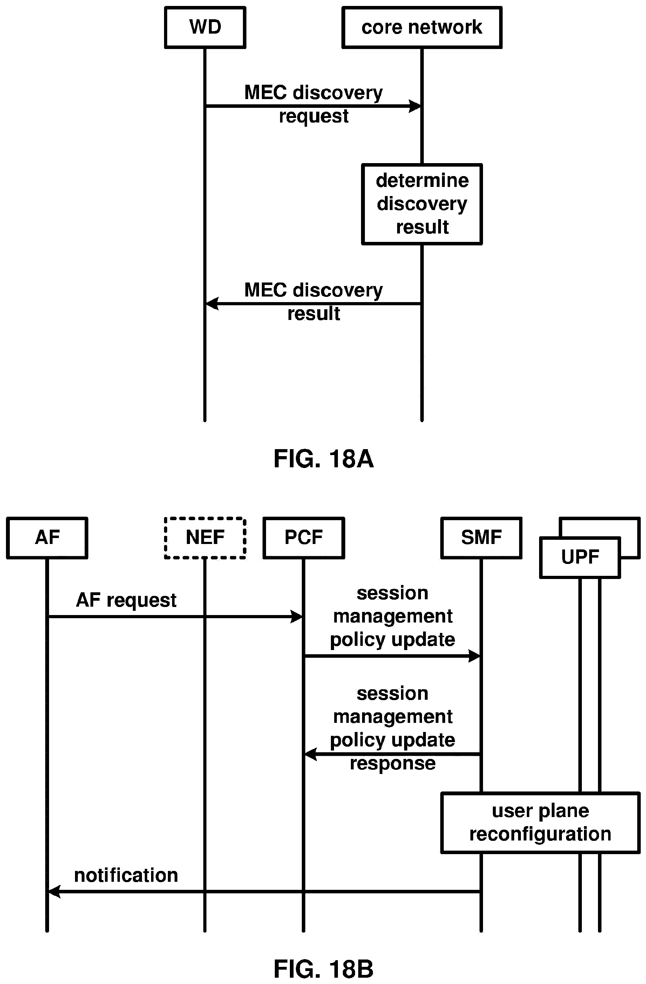

FIG. 18A is an example call flow for MEC discovery. A wireless device may discover MEC applications by sending a MEC discovery request to a CN-CP function. As an example, the request may include a data network name (DNN) of a local DN requesting discovery of MEC applications hosted inside the specified local DN. In some implementations, the absence of a local DN name may indicate that a discovery of all MEC applications is requested. As an example, the request may include an application identifier. The CN-CP function may determine a discovery result. The discovery may be based on registration data of MEC applications hosted by various data networks. The CN-CP function may cross-reference a particular MEC application to a particular data network, or vice-versa. The CN-CP may respond to the wireless device with the discovery result. The discovery result may include a list of one or more application identifiers and/or one or more application addresses (for example, corresponding to a particular DN). In some embodiments, the discovery results may be limited to those MEC applications available to the wireless device. In some embodiments, the discovery results may be limited to those MEC application that the wireless device is authorized to use. The one or more application addresses may be used by the wireless device for upper layer (such as TCP layer) communication with the MEC application.

In an example, a discovery request procedure of the MEC applications may be integrated with a registration procedure between the wireless device and a CN-CP function (e.g., an AMF). In an example, the discovery request procedure of the MEC applications may be integrated with a session establishment procedure between the wireless device and a CN-CP function (e.g., an SMF). The CN-CP function may notify the wireless device about changes in the discovery result, such as an application address change, through an NAS message. The wireless device may request a dedicated PDU session to handle traffic associated with a MEC application. Such a dedicated PDU session may be used for a single edge computing application or shared by multiple edge computing applications.

FIG. 18B illustrates an example of how an AS controller can exert influence on traffic routing of application data within a core network. The AS controller may send an AF request to a PCF. In an example, the AF may send an AF request message to the PCF via an NEF. If the AF request message is sent via the NEF, the NEF may map external identifiers provided by the AF to internal identifiers known by the 5G system (for example, a UE ID, SUPI, etc.). In an example, the AF may send an AF request message to the PCF directly. The AF request may be sent directly to the PCF if, for example, the AF is in a trusted domain and/or deployed by an operator of the core network.

The AF request may comprise any information suitable for influencing traffic routing. Depending on the implementation and/or the capabilities of the AS controller, the AF request may contain a range of information. For example, the AF request may comprise a general request that the core network attempt to optimize the user plane configuration, specific information that the core network may use to facilitate user plane configuration, and/or specific instructions for configuration of the user plane. The AF request may comprise a traffic descriptor (an IP filter and/or an application identifier) describing the application traffic covered by the AF request message. The AF request may comprise a location of one or more applications and/or application servers, for example, a list of DNAIs. The AF request may comprise an identifier of a target wireless device, for example, a generic public subscription identifier (GPSI), user equipment (UE) group identifier. The AF request may comprise N6 routing information indicating how traffic should be forwarded via an N6 interface, for example, a target IP address (and/or port) in the DN to which the application traffic is requested to be tunneled. The AF request may comprise spatial and temporal validity conditions indicating one or more time intervals and/or geographic areas for when and/or where the AF request message is to be applied.

Based on the AF request message, the PCF may create policy and charging control (PCC) rules and/or other relevant information, for example, a requested Session and Service Continuity (SSC) mode, local UPF information, or any other relevant information. The PCF may send a session management policy update message to the SMF. The session management policy update message may indicate the PCC rules and/or the relevant information. The SMF then may act on the relevant information. In an example, by configuring or reconfiguring the user plane. In an example, the SMF may insert an uplink classifier (UL CL) UPF into the user plane based on the information. In an example, the SMF may trigger relocation of a PDU session anchor (PSA) UPF using SSC mode 2 or 3 procedures. As illustrated in the figure, the SMF may send a session management policy update response to the PCF. The response may be sent before or after a user plane reconfiguration. In an example, the response may include an acknowledgement that the session management policy update message has been received. In an example, the response may notify the PCF as to whether and/or how the user plane has been reconfigured.

The AF request may instruct the SMF to notify the AF when a UPF related event occurs. For example, the SMF may notify the AF when a UL CL UPF is inserted into the user plane, when an SSC mode 2 or mode 3 procedure is triggered, and/or when a PSA UPF is relocated. The AF can request to be notified before the event is to take place and/or after the event has taken place. Based on the notification, the AF may take application layer actions such as relocating application state of handle UE IP address changes.

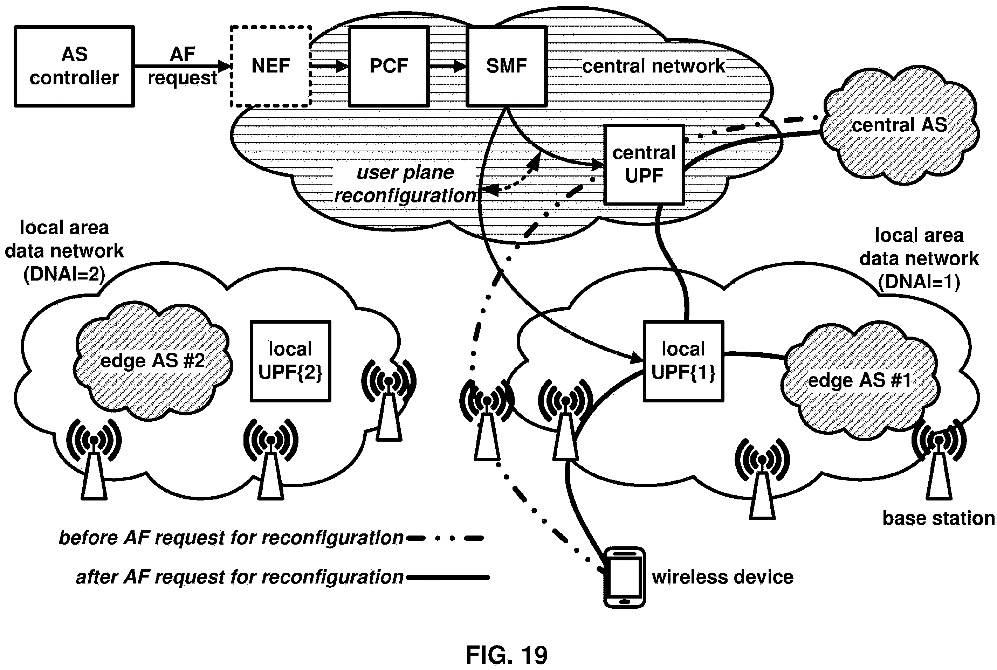

FIG. 19 illustrates an example of an AS controller influencing traffic routing of application data by causing a user plane reconfiguration within a core network. As noted above, the AS controller may be implemented as an AF. The application, or aspects thereof, is accessible in three different data networks. The data networks may comprise a central network, a first local area data network, and a second local area data network. The central network has a DNAI=0 and comprises a central application server. In an example, the central application server may be accessible via the internet. The first local area data network has a DNAI=1 and comprises a first edge application server. The second local area data network has a DNAI=2 and comprises a second edge application server. The first local area data network is associated with one or more UPFs including UPF{1}. The second local area data network is associated with one or more UPFs including UPF{2}.

Initially (before the AF request), the user plane path between the wireless device and the application is via a central UPF associated with the central network (dashed and dotted line in the figure). The location of the central UPF may be remote from the location of the wireless device. Based on the AF request, the SMF may insert a local UPF within the user plane path of the wireless device. In an example, the AF request message may indicate the DNAI of a requested area (DNAI=1). Based on the DNAI indicated by the AF request message, the SMG may select a UPF associated with the first local area data network (i.e., UPF {1}).

After the AF request, the SMF may reconfigure the user plane path. In particular, the wireless device may have a user plane path to an edge application server within the first local area data network and to the central application server (solid line in the figure). Because the first edge application server is nearer to the wireless device than the central application server, it will be understood that communication delay associated with the first edge application server may be less than the communication delay associated with the central application server. Accordingly, in some scenarios, the new user plane path (i.e., the path that is requested by the AS controller) may reduce the delays associated with computational offloading of certain application-related tasks.

In existing technology, a 5G (3GPP) system may support edge computing, by allowing a MEC system and a 5G system to collaboratively interact to route traffic. The MEC system may instruct a change of a user plane path from a central application server to a local application server. The MEC system may redirect a user plane path from a central user plane function (UPF) to a local UPF. In some scenarios, the latency of the user plane path may be reduced by redirecting the user plane path to an application server which is closer to a location of the wireless device. The reduced latency may also present an opportunity for the wireless device to offload processing tasks to the application server. By offloading processing tasks, the wireless device can potentially reduce its computational burden and/or conserve resources. The existing technology may not efficiently decide whether a wireless device should employ computational offloading for an application. The application may be a delay sensitive application. In an example, the wireless device may determine to offload processing of the application to a network node (offloading full computation to an application of the MEC). The wireless device may send data that is unprocessed by the application of the wireless device. Sending the data that is unprocessed by the application may introduce further delay compared to sending data that is processed by the application. The amount of reduced delay by the computational offloading to the network node (MEC) may be smaller than the amount of the additional delay which is introduced to send the unprocessed data and receive a processed result from the network node. For a wireless devices to get service under the MEC environment, an improved session management handling to control the computational offloading decision regarding the delay is needed to increase resource utilization efficiency, battery utilization and to guarantee quality of service of the wireless devices.

Example embodiments support exchange of delay information to facilitate decision-making for offloaded processing of data for an application. An SMF may receive a first message from a wireless device. The first message may comprise delay information for offloaded processing of data for an application. Based on the delay information, the SMF may send offloading information to the wireless device. The decision as to whether to offloaded processing may be based on whether the delay associated with offloading is suitable for the wireless device.

In an example, the delay information may comprise a delay value. The delay value may be provided by the wireless device to the SMF. The offloading information may indicate whether an offloading associated with the delay value can be supported by the network. For example, the delay value may indicate an amount of time that would be acceptable to the wireless device to wait for offloaded processing. The SMF may determine the amount of time based on one or more of (a) time associated with transmission of data to the application server, (b) time associated with processing by an application server, and (c) time associated with transmission of data from the application server to the wireless device. If the amount of time associated with offloaded processing is less than the delay value, then the offloading information may indicate that offloaded processing is supported. If the amount of time associated with offloaded processing is more than the delay value, then the offloading information may indicate that offloaded processing is not supported.

In an example, the delay information may comprise a request for a delay value. The offloading information may indicate the delay value. Based on the delay value, the wireless device may determine whether offloaded processing is suitable. For example, the delay value may indicate an amount of time that would be necessary for the wireless device to wait for offloaded processing. The SMF may determine the delay value based on an amount of time comprising one or more of (a) time associated with transmission of data to the application server, (b) time associated with processing by an application server, and (c) time associated with transmission of data from the application server to the wireless device. If the delay value is acceptable to the wireless device, then the wireless device may determine to request offloaded processing.

The amount of time associated with offloaded processing may be based on one or more of (a) time associated with transmission of data to the application server, (b) time associated with processing by an application server, and (c) time associated with transmission of data from the application server to the wireless device. As described herein, time (delay) associated with transmission may have components, for example, transmission time between the wireless device and a base station, transmission time within the network (e.g., between the base station and a UPF and/or application server), etc. The SMF may be well-positioned to make determinations and/or estimates as to each particular delay component. For example, in the matter of determinations and/or estimates about delay (or some particular delay component), the SMF may be in a better position than a wireless device or application server (central or edge) to create and/or obtain information that affects offloading decisions (e.g., better positioned to obtain information from other network elements such as base station, UPF, etc.).

The SMF may be able to provide offloading information early in the process (e.g., during registration, service request and/or session establishment and/or modification procedures). As described herein, the SMF may select one or more particular UPFs for the wireless device. The selected UPFs may be selected to provide a connection between the wireless device and a particular application server (e.g., a non-centrally located server that supports edge computing for the wireless device). The SMF may have information affecting delay (or obtain such information) from various network elements. Accordingly, the SMF may break down the delay associated with offloaded processing into any number of delay components, and determine, measure, derive, or estimate the respective values of the delay components. By sharing the offloading information with the wireless device, the SMF may facilitate efficient and opportunistic use of edge computing. In an example, the SMF may be able to provide the offloading information before a connection with an application server (central or edge) is even introduced.

In an example, a wireless device may send a session control message (e.g., a PDU session establishment request message, a PDU session modification request message, and/or the like) to a SMF. The session control message may request delay information of the application. The wireless device may receive a session control response message from the SMF. The session control response message may comprise the delay information based on the requesting. The delay information may comprise a delay value. In an example, the delay value may be a sum delay value that includes a plurality of component delay values. Each component delay value may correspond to a communication delay associated with a segment of a user plane path between the wireless device and the application server and/or a processing delay associated with a particular network entity, for example, a processing delay in an application server. The wireless device may determine whether to perform a local computing or an offloading (computational offloading) based on the delay information. In an example, the wireless device may select to perform/execute the local computing if a first delay value indicated by the delay information is larger than a second delay value associated with local computing. In an example, the wireless device may select to perform the offloading if the first delay value is smaller than the second delay value. If the wireless device selects to perform the local computing, the wireless device may send data that is processed by the application to the application server. If the wireless device selects to perform the offloading, the wireless device may send data that is unprocessed by the application. In an example, the delay information may be transmitted to the wireless device periodically. This improved session management may enable the wireless device to efficiently determine an appropriate computing option (e.g., offloading versus local computing) for delay sensitive applications.

In an example, the delay information may be transmitted to the wireless device when a determination/measurement of delay is outside a (min, max) interval or above a threshold value. The delay information may be transmitted to the wireless device by a centralized network entity, a data analytics function such as NWDAF node. The delay information may be prediction information of path delay. For example, the NWDAF may provide prediction on the delay information such that when the wireless device receives the delay information, the wireless device may determine to offload tasks to the network or locally process the data.

In an example, the wireless device may request an establishment of a PDU session for an application to a network, and may provide to the network a required delay value of the PDU session. In an example, the wireless device may determine to offload computation to the network if the network determines that computational offloading can be performed within the amount of time indicated by the required delay value. The network (e.g., SMF) may determine whether the required delay value is acceptable or not for the PDU session. The network may determine whether the network can provide the required delay value for the PDU session. The network may send a result based on the determining. In an example, the result may indicate whether the network can meet the required delay value. In an example, the result may comprises being fulfilled or not being fulfilled. Based on the result, the wireless device may select whether to perform an offloading or a local computing. The wireless device may select to perform the offloading in response to an indication that the network can return a processed result within the amount of time indicated by the required delay value. The wireless device may select to perform the offloading in response to the result indicating being fulfilled. The wireless device may select to perform the local computing in response to the result indicating not being fulfilled. This improved session management may enable the wireless device to efficiently determine an appropriate computing option (e.g., the offloading, the local computing) for the application.

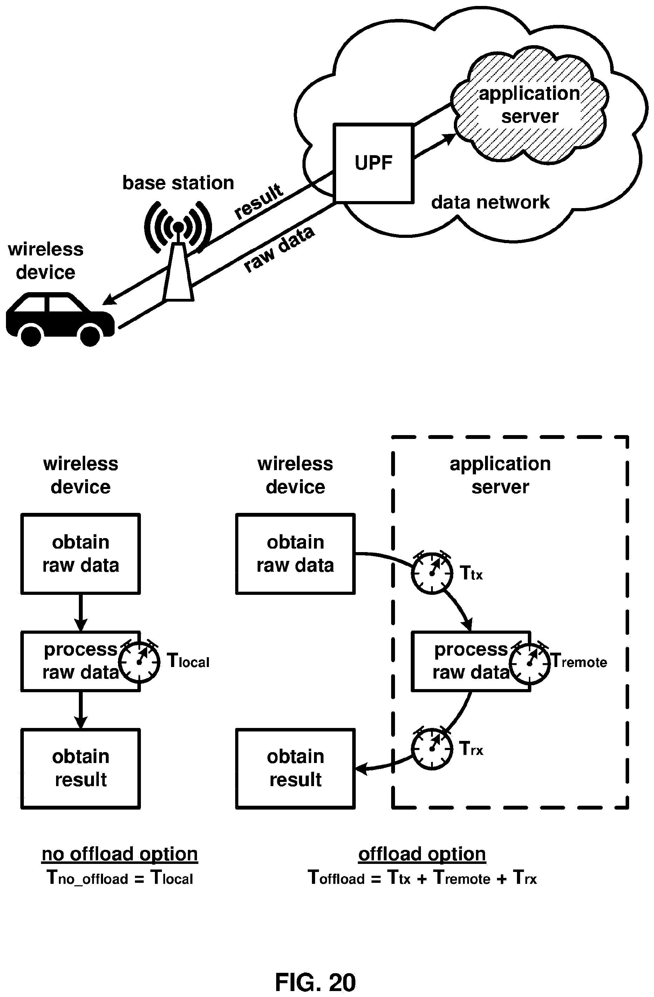

FIG. 20 illustrates examples of computational offloading options. An application may operate on a wireless device, and may require the wireless device to perform tasks. The wireless device may determine to offload tasks to an application server associated with the application. The application server may be an edge application server. The application server may be located in a data network. The data network may be a local area data network. The data network may be a cloud computing data center. The wireless device may send raw data and/or processing tasks to the application server.

The application operating on the wireless device may obtain raw data at the wireless device. The raw data may be referred to as unprocessed data. The raw data may be gathered and/or generated by the wireless device. In this example figure, the wireless device is illustrated as a vehicle. The vehicle is running, for example, a vehicle-to-everything (V2X) automatic driving application. The application may cause the wireless device to take photos of the front, right, left, and rear of the vehicle. The photos may be the raw data. The application may process the raw data to obtain a result. The result may be referred to as processed data. In this example, the result may be a driving direction.

If the wireless device performs the processing locally (local computing option, with no offload), then the total execution time T[no_offload] is equal to the amount of time it takes for the wireless device to locally perform the processing T[local]. The processing may be necessary to determine a driving direction (the result) based on the photos (the raw data) in accordance with the V2X automatic driving application. If the vehicle has limited computing power, this may result in a substantial delay.

Instead of performing the processing locally, the wireless device may offload the processing to the application server. If the processing of raw data is performed in the application server, the wireless device can potentially save computing power, increase processing speed, and/or reduce power consumption. For the offloading option, the wireless device may transmit the raw data (e.g., the photos) to the application server and request offloading. This may introduce a transmission delay T[tx]. The application server may remotely process the raw data, resulting in an additional processing delay T[remote]. The application server may then transmit a processed result (e.g., the driving direction) back to the wireless device. This may introduce a reception delay T[rx]. For the offloading option, the total execution time T[offload] may be equal to the sum of the processing delay of the application server T[remote] and the transmission/reception delays associated with transmission to and from the application server T[tx]+T[rx].

The transmission/reception delays T[tx]+T[rx] may be influenced by any number of factors, for example, the quantity of the raw data, a condition of the data delivery path conditions (for example, radio quality), an availability of network resources, capabilities of the wireless device, and/or the like.

The figure illustrates examples of computational offloading options in which the wireless device performs all or none of the processing necessary to obtain the result from the raw data. However, it will be understood that processing may be split into processing tasks and that a fraction of the processing tasks may be performed locally, while the remainder are offloaded. As an example, the raw data may be pre-processed before it is transmitted to the application server. As an example, the data received from the application server may be post-processed to obtain the result.

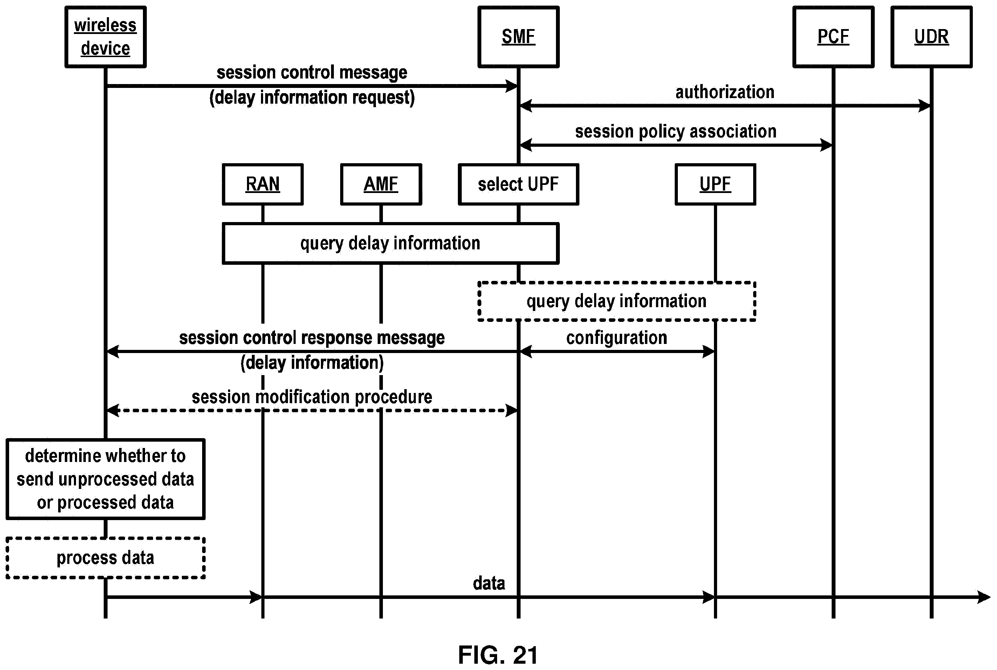

FIG. 21 illustrates a call flow for session handling procedure regarding the computation offloading decision in accordance with an example embodiment of the present disclosure. The figure illustrates a wireless device, a RAN, a UPF, and several core network control plane application functions (an AMF, an SMF, a PCF, and a UDR). The wireless device may choose between a local computing and or an offloading. The local computing may be that an application of the wireless device computes processing of the application. The offloading (e.g., computational offloading) may be that an application of a network node computes processing of the application. The network node may be an application server. The application server may belong to a mobile edge computing (MEC).

The wireless device may compare a first execution delay associated with the local computing to a second execution delay associated with the offloading. The wireless device may derive the first execution delay based on internal interaction with the application layer of the wireless device. In an example, the second execution delay may comprise a processing time at the application server and a transmission/reception delay of the raw data and a processed data to and from the application server. The wireless device may not be aware of the second execution delay. The wireless device may need to query with a network comprising the application server of the application. In an example, the wireless device may query the second execution delay with a network (e.g., SMF) during a PDU session establishment procedure. The wireless device may be authorized to use the offloading.

The wireless device may send, to the SMF, a session control message. The session control message may trigger a session establishment procedure to establish a PDU session for at least one application. The session control message may trigger a session modification procedure to modify the PDU session. The session control message may be a session establishment request message. The session control message may be a session modification request message. In an example, the session control message may comprise a PDU session identity, a request of delay information, and/or the like. The session control message may further comprise DNN of the application and/or an S-NSSAI of the application. The PDU session identity may indicate the PDU session and may be used to by the SMF to identify the PDU session. The request of delay information may indicate a request of the second execution delay. The DNN may be a data network name for the application. The S-NSSAI may be an associated slice name with the application.

In an example, the SMF may receive the session control message. If the session control message comprises the request of delay information, the SMF may check an authorization of the request of delay information of the wireless device. The SMF may determine that the request is authorized based on a subscription information of the wireless device, local policy, and/or the like. If the wireless device/PDU session is authorized to request the delay information, the SMF may determine the delay information based on the request. In an example, the SMF may establish a policy association with a PCF. The SMF may receive QoS parameter for the wireless based on the DNN, S-NSSAI, and/or the like. The QoS parameter may comprise at least one of 5G QoS Identifier (5QI), application and retention priority, reflective QoS attribute, flow bit rates, maximum packet loss rate, aggregate bit rates, and/or the like.

As shown in the figure, the SMF may coordinate with the RAN, the AMF, and/or the UPF to determine delay information. The delay information may be determined by querying the delay information. The delay information may comprise a delay value. The SMF may send a request for delay information and may receive a response comprising, for example, a delay value. The delay value may be represented as, for example, a number of seconds, milliseconds, microseconds, nanoseconds, bits per second (bps), gigabits per second (Gbps), or megabits per second (Mbps), etc.

The delay value may be referred to as a sum delay value and may include a plurality of component delay values. As an example, the sum delay value may comprise a sum of an offload processing delay value and/or at least one communication delay value. The offload processing delay value may be an amount of time for an application server to perform one or more offload processing tasks. The SMF may determine the offload processing delay value based on the UPF selection process. For example, a particular UPF (or combination of UPFs) may be associated with a particular application server with a particular quantity of processing power available. The offload processing delay value may be based on the amount of processing power available at the application server.

A communication delay value may be referred to as a transmission delay value, a transmission /reception delay value, and/or a Tx/Rx delay value. The at least one communication delay value in the sum delay value may comprise (for example, consist of ) a round-trip transmission time from the wireless device to the application server and back to the wireless device. The at least one communication delay value may comprise double the transmission time from the wireless device to the application server, or double the transmission time from the application server to the wireless device. It will be understood that in a scenario where communication speed in different directions is asymmetric, round-trip transmission time may be a more accurate indication. The at least one communication delay value may comprise component communication delay values corresponding to a particular segment of a user plane path between the wireless device and the application server. For example, a first component communication delay value may correspond to a segment between the wireless device and the RAN, a second component communication delay value may correspond to a segment between the RAN and the UPF, and a third component communication delay value may correspond to a segment between the UPF and the application server. If there are multiple UPFs within the user plane path, then the third component communication delay value may be further subdivided into subcomponents corresponding to UPF pairs.

In an example, the SMF may send a message to the AMF requesting a first component communication delay value corresponding to a transmission time and/or a reception time between the wireless device and the RAN. The RAN may be, for example, a base station to which the wireless device is connected. The AMF may send a message to the RAN to request the first component communication delay value. The message may comprise the QoS parameter of the PDU session, DNN, S-NSSAI, a capability of the wireless device, a request for the first component communication delay value, and/or the like. The RAN may determine the first component communication delay value based the QoS parameter, DNN, S-NSSAI, a resource status of the base station, a radio quality with the wireless device, a propagation delay, a capability of the wireless device, and/or the like. The RAN may determine the first component communication delay value based on a round-trip time between the wireless device and the RAN. The first component communication delay value may be equal to the sum of the amount of time to transmit from the RAN to the wireless device and/or the amount of time to transmit from the wireless device to the RAN. In response to the determination, the RAN may send a message comprising the first component communication delay value to the AMF and/or the SMF. In an example, the SMF may receive the message comprising the first component communication delay value. The SMF may use the first component communication delay value to determine the at least one communication delay value and/or the sum delay value. In some implementations, the SMF may assume that the at least one communication delay value and/or the sum delay value is equal to the first component communication delay value based on a presumption that, by comparison to the first component communication delay value, other component communication delay values are small and/or negligible.

The SMF may select a serving UPF for the PDU session. The SMF may select the serving UPF for the PDU session based on the request for delay information. The SMF may select the serving UPF based on at least one of the DNN, S-NSSAI, a location of the wireless device, the request of the delay information, and/or the like. In an example, if the wireless device location is inside of a DNAI-X, the SMF may select a UPF (e.g., UPF 1) associated with the DNAI-X. The association information between the DNAI-X and the UPF 1 may be configured by an AF using the AF influence on traffic routing. If the SMF selects the UPF, the SMF may determine a second component communication delay value (corresponding to an amount of time required to transmit and/or receive data between the base station and the UPF via N3), a third component communication delay value (corresponding to an amount of time required to transmit and/or receive data between the UPF and the application server via N6), or a sum thereof (corresponding to an amount of time required to transmit and/or receive data between the base station and the application server via N3+N6).

In an example, the SMF may send based on the request of the delay information, to the wireless device, a session control response message for the PDU session comprising delay information comprising the delay value (e.g., the sum delay value). In an example, the wireless device may receive the session control response message for the PDU session, from the SMF, comprising the delay information comprising the delay value. The wireless device may select based on the delay information, whether to execute the local computing of the offloading. The wireless device may determine whether to apply the local computing or the offloading based on the delay value, a local processing delay, an amount of raw data (e.g., unprocessed data), remaining battery of the wireless device and/or the like.

In an example, the delay value may represent an amount of time to perform one or more processing tasks. The wireless device may determine to select the offloading in response to the first delay value corresponding to offloading being less than or equal to a second delay value corresponding to local computing. In an example, the delay value may be represented as a data speed (e.g., bits per second). The wireless device may determine to select the offloading in response to the first delay value corresponding to offloading being greater than or equal to a second delay value corresponding to local computing. In an example, the first delay value corresponding to offloading may be 10 Gbps and the second delay value corresponding to local computing may be 5 Gbps. In this case, the wireless device may determine to select the offloading.

In an example, the wireless device may compare the first execution delay and the second execution delay. The second execution delay is based on the delay value. In an example, the second execution delay is the delay value. The wireless device may select the offloading in response to the second execution delay is shorter/lower than the first execution delay. In an example, the wireless device may determine to select the local computing in response to the delay value being equal or larger/longer/higher to the delay value of the local computing. In an example, the wireless device may compare the first execution delay and the second execution delay. The wireless device may select the local computing in response to the second execution delay is longer/larger/higher than the first execution delay.

If the wireless device selects the local computing, the wireless device may process raw data to obtain a result and send processed data to the base station. The processed data may be processed by the application of the wireless device. If the wireless device selects the offloading, the wireless device may send unprocessed data (raw or partially processed data) to the application server via the base station. The wireless device may receive a processed result in response to sending the unprocessed data.

In an example, the wireless device or the SMF may initiate a session modification procedure in response to applying the offloading. The session modification may be based on a need to modify a QoS of the PDU session after applying the offloading. If the offloading is selected, the wireless device may need to send more packet data than the local computing case. In an example, the wireless device may request an increased QoS to the SMF. The SMF may indicate an increased QoS the wireless device by sending a session modify request message.

This improved session management may realize the wireless device can determine appropriate computing option (e.g., the offloading, the local computing) by querying the second execution delay.

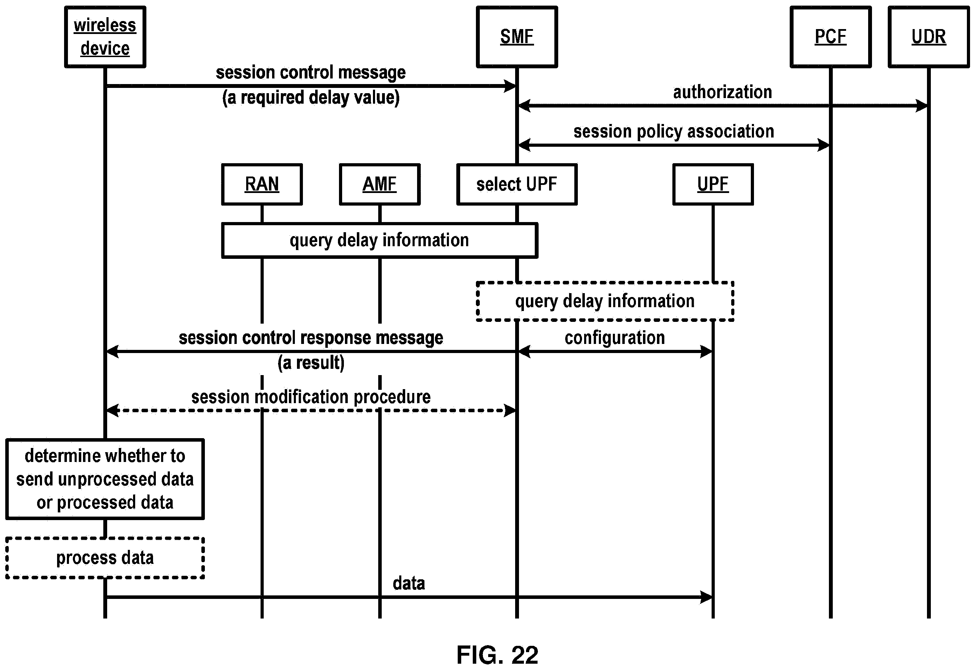

FIG. 22 illustrates a call flow for session handling procedure regarding the computation offloading decision in accordance with an example embodiment of the present disclosure. As will be discussed in greater detail below, the wireless device may operate in accordance with an application and may determine whether to process the data locally or offload processing to an application server. The wireless device may determine a delay value that would lead the wireless device to select the offloading option. The delay value may be based on the capability of the wireless device (e.g., the amount of time required to perform a local computing task and/or a bitrate associated with local computing). The wireless device may provide the determined delay value to the network (e.g., the SMF), and the network may determine whether the network can provide a better delay value (e.g., lower delay or higher bitrate) than the wireless device can obtain using local computing. The network may indicate that it can or can not provide a better delay value. The wireless device may selecting between local computing and offloading based on the indication.

The figure illustrates a wireless device, a RAN, a UPF, and several core network control plane application functions (an AMF, an SMF, a PCF, and a UDR). The wireless device may choose between a local computing and or an offloading. The local computing may be that an application of the wireless device computes processing of the application. The offloading (e.g., computational offloading) may be that an application of a network node computes processing of the application. The network node may be an application server. The application server may belong to a mobile edge computing (MEC). In this example embodiment, the wireless device may determine a required delay value for the second execution delay associated with the offloading. The required delay value is for the MEC. The wireless device may request the required delay value to the network while a PDU session handling procedure and the network may provide a result of the required delay value. The result may indicate that whether the required delay value for the PDU session is acceptable or not. The result may indicate that whether the required delay value is fulfilled or not by the network. The wireless device may determine whether to select the offloading or the local computing. The wireless device may select the offloading in response to the result indicating accepted or being fulfilled. The wireless device may select local computing in response to the result indicating not accepted/acceptable or not being fulfilled.

The wireless device may send, to the SMF, a session control message. The session control message may trigger a session establishment procedure to establish a PDU session for at least one application. The session control message may trigger a session modification procedure to modify the PDU session. The session control message may be a session establishment request message. The session control message may be a session modification request message. In an example, the session control message may comprise a PDU session identity, the required delay value, and/or the like. The session control message may further comprise DNN of the application and/or an S-NSSAI of the application. The PDU session identity may indicate the PDU session and may be used to by the SMF to identify the PDU session. The required delay value may indicate a threshold delay value to adopt the offloading. The DNN may be a data network name for the application. The S-NSSAI may be an associated slice name with the application.

In an example, the SMF may receive the session control message. If the session control message comprises the required delay value, the SMF may check whether the wireless device is authorized for the offloading. The SMF may determine that the offloading is authorized based on a subscription information of the wireless device, local policy, and/or the like. If the offloading is authorized for the wireless device and/or the PDU session, the SMF may allocate more resources for the PDU session.

The SMF may establish a policy association with a PCF. The SMF may receive QoS parameter for the wireless based on the DNN, S-NSSAI, and/or the like. The QoS parameter may comprise at least one of 5G QoS Identifier (5QI), application and retention priority, reflective QoS attribute, flow bit rates, maximum packet loss rate, aggregate bit rates, and/or the like. The SMF may relax the QoS parameter if the received QoS is insufficient for the required delay value. The SMF may increase the QoS level if the received QoS is insufficient for the required delay value.

As shown in the figure, the SMF may coordinate with the RAN, the AMF, and/or the UPF to determine whether the required delay value is acceptable/fulfilled or not. The SMF may coordinate with the RAN, the AMF, and/or the UPF to determine whether the required delay value is acceptable/fulfilled or not by querying an available delay value. The available delay value may be a sum delay value that includes a plurality of component delay values, each corresponding to a segment of a user plane path between the wireless device and the application server. The available delay value may be referred to as a communication delay value, a transmission /reception delay value, and/or a Tx/Rx delay value. The available delay value may be represented as a data speed such as bits per second (bps), gigabits per second (Gbps), or megabits per second (Mbps). The delay value may correspond to a round trip (transmit and receive) or may correspond to a single leg of the round trip (transmit or receive) indicate 10 Mbps.

In an example, the SMF may send a message to the AMF requesting a component delay value corresponding to a transmission time and/or a reception time between the wireless device and the RAN. The RAN may be, for example, a base station to which the wireless device is connected. The AMF may send a message to the RAN to request a second delay value. The message may comprise the QoS parameter of the PDU session, DNN, S-NSSAI, a capability of the wireless device, a request of the second delay value, and/or the like. The RAN may determine the second delay value based the QoS parameter, DNN, S-NSSAI, a resource status of the base station, a radio quality with the wireless device, a propagation delay, a capability of the wireless device, and/or the like. The RAN may determine the second delay value based on a round-trip time between the wireless device and the RAN. The second delay value may be equal to the sum of the amount of time to transmit from the RAN to the wireless device and the amount of time to transmit from the wireless device to the RAN. In response to the determination, the RAN may send a message comprising the second delay value to the AMF and/or the SMF. In an example, the SMF may receive the message comprising the second delay value. The SMF may use the second delay value to determine the sum delay value. In some implementations, the SMF may assume that the sum delay value is equal to the second delay value based on a presumption that the third delay value and/or the forth delay value are small by comparison to the second delay value. If the sum delay value is longer/larger/higher than the required delay value, the SMF may determine the required delay value is not acceptable/fulfilled by the network. If the SMF determines the required delay value is not acceptable/fulfilled by the network, the result may indicate 'not being fulfilled' or 'not accepted'. If the sum delay value is equal or shorter/smaller/lower than the required delay value, the SMF may determine the required delay value is acceptable/fulfilled by the network. If the SMF determines the required delay value is acceptable/fulfilled by the network, the result may indicate 'being fulfilled' or 'accepted'.

In an example, the delay value, the required delay value, the second delay value, the available delay value, the sum delay value may be represented as a data speed. In this case, the determining equation with longer/larger/higher may be interchangeable to the shorter/lower/smaller (vice versa).

The SMF may select a serving UPF for the PDU session. The SMF may select the serving UPF for the PDU session based on the required delay value. The SMF may select the serving UPF based on at least one of the DNN, S-NSSAI, a location of the wireless device, the required delay value, and/or the like. The SMF may select a UPF locating in edge of the wireless device, if the required delay value indicates shortest path is preferable. If the SMF selects the UPF, the SMF may determine a third (transmission/reception) delay value. The third delay value may correspond to a time period required to transmit and/or receive data between the UPF and an application server (e.g., N6) or between the base station and the application function (e.g,, N3+N6).

The SMF may determine the available delay value based on the second delay value and the third delay value. In an example, the available delay value may be the sum of the second delay value and the third delay value. In an example, the third delay value may be considered as zero regarding that the third delay value is relatively shorter than the second delay value. In an example, the delay value, the second delay value and the third delay value may be one direction delay.

In an example, the SMF may send based on the required delay value and the available delay value, to the wireless device, a session control response message for the PDU session comprising a result. The result is based on the comparison between the required delay value and the available delay value. In the example, the result may indicate 'being accepted' or 'not being accepted'. The result may indicate 'being fulfilled' or 'not being fulfilled'.

In an example, the wireless device may receive the session control response message for the PDU session, from the SMF, comprising the result. The wireless device may select based on the result, whether to execute the local computing of the offloading. The wireless device may determine whether to apply the local computing or the offloading based on the result, a local processing delay, an amount of raw data (e.g., unprocessed data), remaining battery of the wireless device and/or the like. The wireless device may select the offloading in response to the result indicating 'accepted/being fulfilled'. The wireless device may select the local computing in response to the result indicating 'not accepted/not being fulfilled'.

If the wireless device selects the local computing, the wireless device may send processed data to the base station. The processed data may be processed by the application of the wireless device. If the wireless device selects the offloading, the wireless device may send unprocessed data (raw data) to the application server via the base station. The wireless device may receive a processed result in response to sending the unprocessed data.

In an example, the wireless device or the SMF may initiate a session modification procedure in response to applying the offloading. The session modification may be based on a need to modify a QoS of the PDU session after applying the offloading. If the offloading is selected, the wireless device may need to send more packet data than the local computing case. In an example, the wireless device may request an increased QoS to the SMF. The SMF may indicate an increased QoS the wireless device by sending a session modify request message.

This improved session management may realize the wireless device can determine appropriate computing option (e.g., the offloading, the local computing) by requesting the required delay value for the offloading. By providing the required delay value, the network (e.g., SMF) may increase QoS level so the MEC may provide session handling regarding the delay.

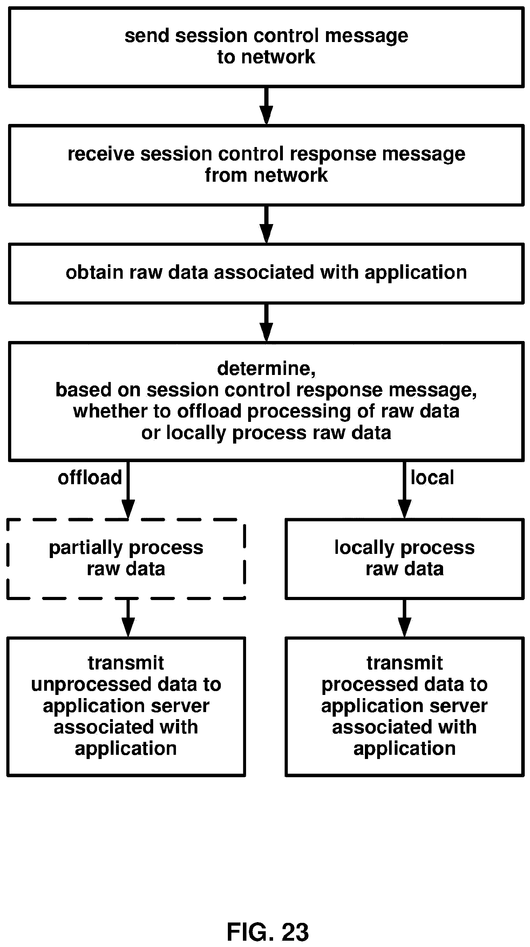

FIG. 23 illustrates a call flow for a wireless device in accordance with an example embodiment of the present disclosure. The wireless device may send a session control message to a network. For example, the wireless device may comprise one or more of a delay information request or a required delay value. The wireless device may receive a session control response message from the network. For example, the session control response message may comprise one or more of delay information or an indication as to whether a required delay value can be obtained. The wireless device may obtain raw data associated with an application. The wireless device may determine, based on the session control response message, whether to offload processing of the raw data or locally process the raw data. If the wireless device determines to offload processing of the raw data, the wireless device may, optionally, partially process the raw data. If the wireless device determines to offload processing of the raw data, the wireless device may transmit unprocessed raw data (i.e., raw data or partially processed data) to an application server associated with the application. If the wireless device determines to locally process raw data, the wireless device may locally process the raw data and transmit the processed data to the application server associated with the application.

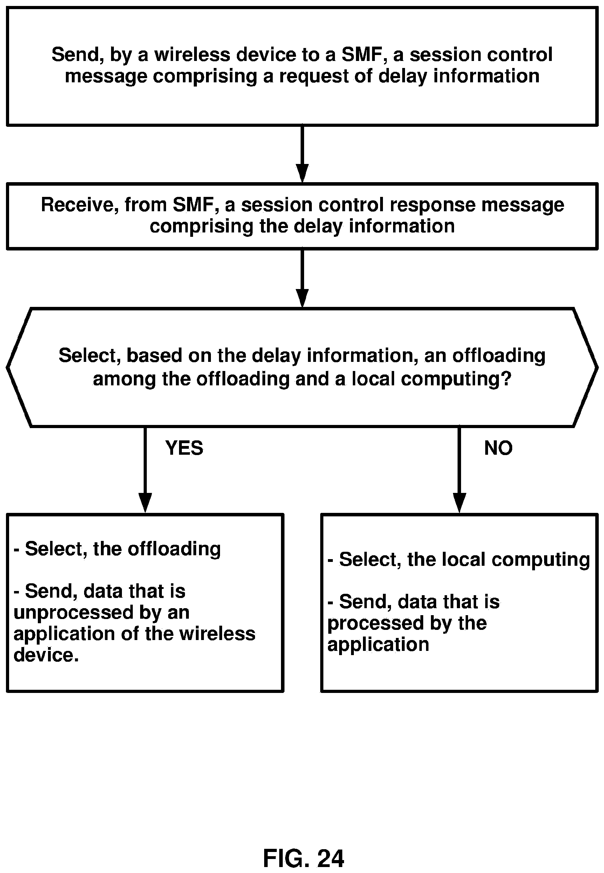

FIG. 24 illustrates a call flow for a wireless device in accordance with an example embodiment of the present disclosure. In an example, the wireless device may send a session control message, to an SMF, requesting delay information. The session control message may comprise a request of the delay information. The wireless device may receive a session control response message in response to sending the session control message. The session control response message may comprise the delay information. The wireless device may determine whether to select an offload or a local computing based on the delay information. If the wireless device selects the offloading, the wireless device may send data that is unprocessed by an application of the wireless device. If the wireless device selects the local computing, the wireless device may send data that is processed by the application of the wireless device.

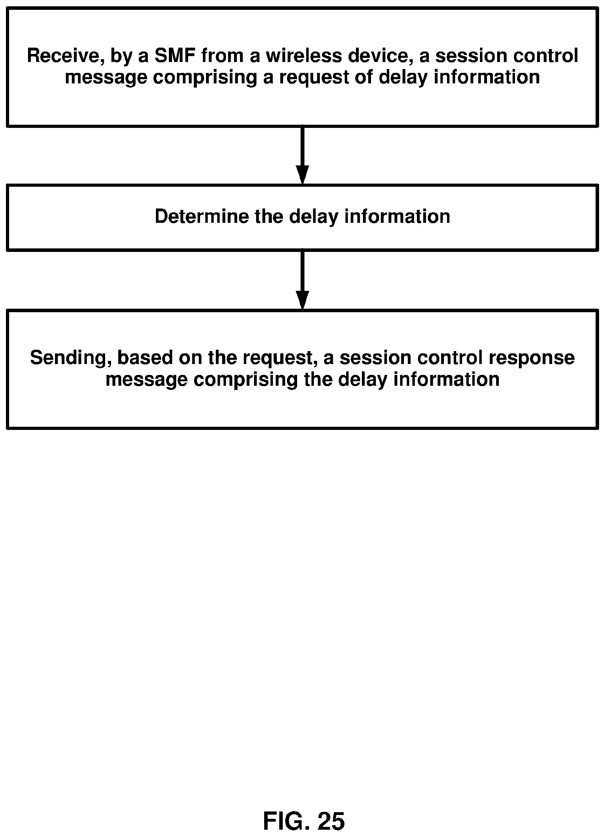

FIG. 25 illustrates a call flow for a SMF in accordance with an example embodiment of the present disclosure. In an example, the SMF may from a wireless device, a session control message comprising a request of delay information. The SMF may determine the delay information based on the request. The SMF may cooperate with a RAN and a UPF to query the delay information. The SMF may send a session control response message comprising the delay information based on the determination.

The wireless device may send a session control message to a session management function (SMF), requesting an establishment of a packet data unit (PDU) session for an application. The session control message may comprise a PDU session identity indicating the PDU session and a request of delay information. The wireless device may receive from the SMF, a session control response message comprising delay information of the PDU session. The session control response message may comprise the delay information based on the request. The wireless device may select whether to execute an offloading or a local computing for PDU session, based on the delay information. In response to selecting the offloading, the wireless device may send data that is unprocessed by a first application of the wireless device. In response to not selecting the offloading, the wireless device may select the local computing. In response to selecting the local computing, the wireless device may send data that is unprocessed by a first application of the wireless device.

The local computing may be that the first application of the wireless device computes processing of the application. The offloading may be that a second application of a network node computes processing of the application. A mobile edge computing (MEC) may comprise the network node.

A delay of the delay information may be between the first application of the wireless device and the second application a network node. The wireless device may be authorized to use the offloading the second application. The application may be a delay sensitive application.

In an example, the delay of the delay information may be between a base station and the wireless device. The delay of the delay information may between a user plane function (UPF) and the wireless device.

The wireless device may send to the SMF, a session modification request message requesting a modification of quality of service (QoS) requirement of the application. The wireless device may send the session modification request message may be based on selecting the offloading.

The session control message may be a PDU session establishment request message. The session control message may be a PDU session modification request message. The PDU session modification request message may trigger a modification of the session.

The delay information comprises a delay value. Selecting the offloading may be further based on the delay value being smaller/larger than a second delay value of the local computing.

Selecting the local computing may be based on the delay value being larger/smaller than the second delay value of the local computing. The second delay value is a processing delay value of the local computing.

In an example, a session management function (SMF) may receive a session control message from a wireless device, requesting an establishment of a packet data unit (PDU) session for an application. The session control message may comprise a PDU session identity indicating the PDU session and a request of delay information. The SMF may determine, based on the request, a delay value of the PDU session. The SMF may send SMF based on the request, to the wireless device, a session control response message. The session control response message may comprise the PDU session identity, delay information comprising the delay value. The SMF may send, based on the request, to a base station via an access and mobility management function (AMF), a second request requesting a second delay value. The SMF may receive from the base station, the second delay value based on the second request. The delay value may be the second delay value.

The SMF may select, based on the request, a user plane function (UPF) for the PDU session. The SMF may send to the UPF, a setup request message. The SMF may receive a setup response message from the UPF. The setup response message may comprise a third delay value. The third delay value may be a delay value between the base station and the UPF. The third delay value may be a delay value between the base station and a second application of a network node.

The delay value may be a sum of the second delay value and the third delay value.

In an example, a wireless device may send to a session management function (SMF), a session control message requesting an establishment of a packet data unit (PDU) session for an application. The session control message may comprise a PDU session identity indicating the PDU session and a required delay value. The wireless device may receive from the SMF, a session control response message comprising a result of the required delay value. The result may indicate at least one of being fulfilled or not being fulfilled. The wireless device may select whether to execute an offloading or a local computing, for PDU session, based on the result. In response to selecting the offloading, the wireless device may send data that is unprocessed by a first application of the wireless device. The wireless device may send data that is processed by the first application of the wireless device in response to selecting the local computing.

The local computing may be that the first application of the wireless device computes processing of the application. The offloading may be that a second application of a network node computes processing of the application. A mobile edge computing (MEC) may comprise the network node. The required delay value may be between the first application of the wireless device and the second application a network node. The required delay value may be a threshold delay value. The required delay value may between a base station and the wireless device. The required delay value may be between a user plane function (UPF) and the wireless device.

The wireless device may send to the SMF, a session modification request message requesting a modification of quality of service (QoS) requirement of the application, based on the result. Sending the session modification request message may be based on selecting the offloading.

Selecting the offloading may be further based on the result indicating being fulfilled. Selecting the local computing may be based on the result indicating not being fulfilled.

In an example, a session management function (SMF) may receive from a wireless device, a session control message requesting an establishment of a packet data unit (PDU) session for an application. The session control message may comprise a PDU session identity indicating the PDU session and a required delay value. The SMF may determine based on the required delay value, whether the required delay value of the PDU session if fulfilled or not. Based on the determining, the SMF may send to the wireless device, a session control response message comprising a result of the determining. The result may indicate being fulfilled or not being fulfilled.

The SMF may send to a base station via an access and mobility management function (AMF), based on the required delay value, a second request requesting a second delay value of the PDU session. The SMF may receive from the base station, the second delay value based on the second request. The result may indicate as being fulfilled in response to the second delay value being equal (to) or smaller than the required delay value. The result indicates as not being fulfilled in response to the second delay value being larger/longer than the required delay value.

The SMF may select a user plane function (UPF) for the PDU session, based on the required delay value. The SMF may send to the UPF, a setup request message. The SMF may receive from the UPF, a setup response message. The setup response message may comprise a third delay value. The third delay value may be a delay value between the base station and the UPF. The third delay value may be a delay value between the base station and a second application of a network node. The result may indicate as being fulfilled, in response a sum of the second delay value and the third delay value being equal (to) or smaller than the required delay value. The result may indicate as not being fulfilled, in response a sum of the second delay value and the third delay value being larger than the required delay value.

In this specification, a and an and similar phrases are to be interpreted as at least one and one or more. In this specification, the term may is to be interpreted as may, for example. In other words, the term may is indicative that the phrase following the term may is an example of one of a multitude of suitable possibilities that may, or may not, be employed to one or more of the various embodiments. If A and B are sets and every element of A is also an element of B, A is called a subset of B. In this specification, only non-empty sets and subsets are considered. For example, possible subsets of B = {cell1, cell2} are: {cell1}, {cell2}, and {cell1, cell2}.

In this specification, parameters (Information elements: IEs) may comprise one or more objects, and each of those objects may comprise one or more other objects. For example, if parameter (IE) N comprises parameter (IE) M, and parameter (IE) M comprises parameter (IE) K, and parameter (IE) K comprises parameter (information element) J, then, for example, N comprises K, and N comprises J. In an example embodiment, when one or more messages comprise a plurality of parameters, it implies that a parameter in the plurality of parameters is in at least one of the one or more messages but does not have to be in each of the one or more messages.

Many of the elements described in the disclosed embodiments may be implemented as modules. A module is defined here as an isolatable element that performs a defined function and has a defined interface to other elements. The modules described in this disclosure may be implemented in hardware, software in combination with hardware, firmware, wetware (i.e. hardware with a biological element) or a combination thereof, which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally, it may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. Finally, it needs to be emphasized that the above mentioned technologies are often employed in combination to achieve the result of a functional module.

Example embodiments of the invention may be implemented using various physical and/or virtual network elements, software defined networking, virtual network functions.

The disclosure of this patent document incorporates material which is subject to copyright protection. The copyright owner has no objection to the facsimile reproduction by anyone of the patent document or the patent disclosure, as it appears in the Patent and Trademark Office patent file or records, for the limited purposes required by law, but otherwise reserves all copyright rights whatsoever.

Below some of the exemplary embodiments described above are summarized. It is emphasized that the following list, which includes 50 items, is not exhaustive but rather a summary of illustrative examples included in the above description. In is understood that these examples do not necessarily include all features of the appended claims.

Example 1: A method comprising:
receiving, by a session management function, SMF, (160) from a wireless device (100), a first message comprising a delay value indicating a processing time at the wireless device of data for an application; and
sending, by the SMF to the wireless device, based on the delay value and an amount of time associated with offloaded processing of the data, a second message indicating whether the offloaded processing is supported.

Example 2: The method of example 1, wherein:
the first message comprises a session identifier and a request for an establishment of a session.
the second message comprises a session establishment accept message.

Example 3: The method of example 1, wherein:
the first message comprises a session identifier and a request for a modification of a session.
the second message comprises a session modification accept message.

Example 4: The method of any one of examples 1 to 3, wherein the second message indicates that offloaded processing of the data is supported based on an amount of time associated with the offloaded processing of the data being less than the delay value.

Example 5: The method of any one of examples 1 to 4, wherein the second message indicates that the offloaded processing of the data is not supported based on an amount of time associated with the offloaded processing of the data being greater than the delay value.

Example 6: A method comprising:
receiving, by a session management function, SMF, (160) from a wireless device (100), a first message comprising a request for a delay value associated with offloaded processing of data for an application; and
sending, by the SMF to the wireless device, based on the request, a second message comprising the delay value indicating an amount of time associated with the offloaded processing of the data.

Example 7: The method of example 6, wherein:
the first message comprises a session identifier and a request for an establishment of a session.
the second message comprises a session establishment accept message.

Example 8: The method of example 6, wherein:
the first message comprises a session identifier and a request for a modification of a session.
the second message comprises a session modification accept message.

Example 9: The method of any one of examples 6 to 8, wherein the amount of time comprises a processing time at an application server associated with the application.

Example 10: The method of any one of examples 6 to 9, wherein the amount of time comprises one or more of:
a first transmission time associated with transmission of data between the wireless device and a base station; and
a second transmission time associated with transmission of data between the base station and an application server associated with the application.

Example 11: A method comprising:
receiving, by a session management function, SMF, (160) from a wireless device (100), a first message comprising delay information for offloaded processing of data for an application; and
sending, by the SMF to the wireless device, based on the delay information, a second message comprising offloading information.

Example 12: The method of example 11, wherein the first message comprises a session identifier.

Example 13: The method of any one of examples 11 to 12, wherein the first message comprises a session control message.

Example 14: The method of any one of examples 11 to 13, wherein the first message comprises a request for an establishment of a session.

Example 15: The method of any one of examples 11 to 13, wherein the first message comprises a request for a modification of a session.

Example 16: The method of any one of examples 11 to 15, wherein the first message comprises a data network name, DNN.

Example 17: The method of any one of examples 11 to 16, wherein the first message comprises single network slice selection assistance information, S-NSSAI.

Example 18: The method of any one of examples 12 to 17, wherein the session is associated with the application and the session identifier is an identifier of the session.

Example 19: The method of any one of examples 11 to 18, wherein the second message comprises a session control response message.

Example 20: The method of any one of examples 11 to 19, wherein the second message comprises one or more of:
a session establishment accept message; and
a session modification accept message.

Example 21: The method of any one of examples 11 to 20, wherein the delay information indicates that offloaded processing is requested.

Example 22: The method of any one of examples 11 to 21, wherein the delay information comprises a delay value.

Example 23: The method of example 22, wherein the delay value indicates a processing time at the wireless device.

Example 24: The method of any one of examples 22 to 23, wherein the offloading information indicates that offloaded processing of the data is supported based on an amount of time associated with the offloaded processing of the data being less than the delay value.

Example 25: The method of any one of examples 22 to 24, wherein the offloading information indicates that the offloaded processing of the data is not supported based on an amount of time associated with the offloaded processing of the data being greater than the delay value.

Example 26: The method of any one of examples 11 to 21, wherein the delay information comprises a request for a delay value indicating an amount of time associated with the offloaded processing of the data.

Example 27: The method of example 26, wherein the amount of time comprises a processing time at an application server.

Example 28: The method of any one of examples 26 to 27, wherein the amount of time comprises a first transmission time associated with transmission of data between the wireless device and a base station, the first transmission time being associated with one or more of:
transmission of data from the wireless device to a base station; and
transmission of data from to the wireless device from the base station.

Example 29: The method of example 28, further comprising sending, to one or more of the base station and an access and mobility management function, a request for information of the first transmission time.

Example 30: The method of example 29, wherein the request for information of the first transmission time comprises one or more of:
one or more quality of service parameters;
a data network name, DNN; and
single network slice selection assistance information, S-NSSAI.

Example 31: The method of any one of examples 26 to 30, wherein the amount of time comprises a second transmission time associated with transmission of data between a base station and an application server associated with the application, the second transmission time being associated with one or more of:
transmission of data from the base station to the application server associated with the application; and
transmission of data to the base station from the application server associated with the application.

Example 32: The method of example 31, further comprising sending, to a user plane function, a query for information of the second transmission time.

Example 33: The method of example 32, wherein the user plane function is determined based on the first message.

Example 34: The method of any one of examples 26 to 33, wherein the amount of time comprises a transmission delay associated with transmission of the data between the wireless device and an application server associated with the application.

Example 35: The method of any one of examples 26 to 34, wherein the offloading information comprises the delay value.

Example 36: The method of any one of examples 1 1 to 35, further comprising determining, by the SMF, that the wireless device is authorized to offload processing of the data.

Example 37: The method of example 36, further comprising obtaining, by the SMF, subscription information of the wireless device, wherein the determining that the wireless device is authorized is based on the subscription information.

Example 38: The method of any one of examples 1 1 to 37, further comprising determining, by the SMF and based on the delay information, a user plane function, UPF.

Example 39: A session management function (160) comprising one or more processors and memory storing instructions that, when executed by the one or more processors, cause the session management function to perform the method of any of examples 1 to 38.

Example 40: A non-transitory computer-readable medium comprising instructions that, when executed by one or more processors, cause the one or more processors to perform the method of any of examples 1 to 38.

Example 41: A method comprising:
sending, by a wireless device (100) to a session management function, SMF, (160), a first message comprising delay information for offloaded processing of data for an application; and
receiving, by the wireless device from the SMF, based on the delay information, a second message comprising offloading information.

Example 42: The method of example 41, wherein:
the first message comprises a session identifier and a request for an establishment of a session.
the second message comprises a session establishment accept message.

Example 43: The method of example 41, wherein:
the first message comprises a session identifier and a request for a modification of a session.
the second message comprises a session modification accept message.

Example 44: The method of any one of examples 41 to 43, wherein:
the delay information indicates that offloaded processing is requested; and
the offloading information comprises a delay value indicating an amount of time associated with the offloaded processing of the data.

Example 45: The method of any one of examples 41 to 43, wherein:
the delay information comprises a delay value comprising a processing time at the wireless device; and
the offloading information indicates whether an amount of time associated with the offloaded processing of the data being is less than the delay value.

Example 46: The method of any one of examples 41 to 45, further comprising determining, by the wireless device, based on the offloading information, whether to offload processing of the data for the application.

Example 47: The method of any one of examples 41 to 46, further comprising:
determining, by the wireless device, to offload processing of the data for the application; and
transmitting, by the wireless device, data for the application that is at least partially unprocessed.

Example 48: A wireless device (100) comprising one or more processors and memory storing instructions that, when executed by the one or more processors, cause the wireless device to perform the method of any of examples 41 to 47.

Example 49: A non-transitory computer-readable medium comprising instructions that, when executed by one or more processors, cause the one or more processors to perform the method of any of examples 41 to 47.

Example 50: A system, comprising:
a session management function (160) comprising: one or more processors and memory storing instructions that, when executed by the one or more processors, cause the session management function to:
   receive a first message comprising delay information for offloaded processing of data for an application; and
   send, based on the delay information, a second message comprising offloading information; and
a wireless device (110) comprising: one or more processors and memory storing instructions that, when executed by the one or more processors, cause the wireless device to:
   send the first message; and
   receive the second message.

While various embodiments have been described above, it should be understood that they have been presented by way of example, and not limitation. It will be apparent to persons skilled in the relevant art(s) that various changes in form and detail can be made therein without departing from the scope of the appended claims. In fact, after reading the above description, it will be apparent to one skilled in the relevant art(s) how to implement alternative embodiments. Thus, the present embodiments should not be limited by any of the above described exemplary embodiments. In particular, it should be noted that, for example purposes, the above explanation has focused on the example(s) using 5G AN. However, one skilled in the art will recognize that embodiments of the invention may also be implemented in a system comprising one or more legacy systems or LTE. The disclosed methods and systems may be implemented in wireless or wireline systems. The features of various embodiments presented in this invention may be combined. One or many features (method or system) of one embodiment may be implemented in other embodiments. A limited number of example combinations are shown to indicate to one skilled in the art the possibility of features that may be combined in various embodiments to create enhanced transmission and reception systems and methods.

In addition, it should be understood that any figures which highlight the functionality and advantages, are presented for example purposes. The disclosed architecture is sufficiently flexible and configurable, such that it may be utilized in ways other than that shown. For example, the actions listed in any flowchart may be re-ordered or optionally used in some embodiments.

## Claims

1. A method comprising:
receiving, by a session management function, SMF, from a wireless device (100), a first message comprising a request for a processing time associated with offloaded processing of data for an application; and
sending, by the SMF to the wireless device and based on the request, a second message comprising the processing time indicating an amount of time associated with the offloaded processing of the data.

2. The method of claim 1, wherein:
the amount of time comprises a transmission time associated with transmission of data between the wireless device and a base station; and
the transmission time being associated with one or more of:
transmission of data from the wireless device to the base station; or
transmission of data to the wireless device from the base station.

3. The method of any one of claims 1 to 2, wherein the amount of time comprises a processing time associated with the processing of data by an application server.

4. The method of any one of claims 1 to 3, further comprising determining, by the SMF, that the wireless device is authorized to offload processing of the data.

5. The method of claim 4, further comprising obtaining, by the SMF, subscription information of the wireless device, wherein the determining that the wireless device is authorized is based on the subscription information.

6. The method of any one of claims 4 to 5, wherein the sending the second message is based on the determining.

7. The method of any one of claims 1 to 6, further comprising determining, by the SMF, that the processing time is less than a local processing time of the wireless device.

8. A method comprising:
sending, by a wireless device to a session management function, SMF, a first message comprising a request for a processing time associated with offloaded processing of data for an application; and
receiving, by the wireless device from the SMF, a second message comprising the processing time indicating an amount of time associated with the offloaded processing of the data.

9. The method of claim 8, wherein:
the amount of time comprises a transmission time associated with transmission of data between the wireless device and a base station; and
the transmission time being associated with one or more of:
transmission of data from the wireless device to the base station; or
transmission of data to the wireless device from the base station.

10. The method of any one of claims 8 to 9, wherein the amount of time comprises a processing time associated with the processing of data by an application server.

11. The method of any one of claims 8 to 10, wherein the wireless device is authorized to offload data.

12. The method of any one of claims 8 to 11, further comprising determining, by the wireless device and based on the processing time, whether to offload processing of the data for the application to an application server associated with the application.

13. The method of claim 12, wherein determining whether to offload processing of the data is further based on a local processing time of the wireless device.

14. An apparatus comprising:
one or more processors; and
memory storing instructions that, when executed by the one or more processors, cause the apparatus to perform the method of any one of claims 1 to 13.

15. A non-transitory computer-readable medium comprising instructions that, when executed by one or more processors of an apparatus, cause the apparatus to perform the method of any one of claims 1 to 13.
